# EUROPEAN PATENT APPLICATION

(11) **EP 4 660 802 A1**
(43) Date of publication of application: **10.12.2025**
(21) Application number: 24760448.1
(22) Date of filing: 22.02.2024
(51) Int. Cl.: G06F 9/48, G06F 11/32

(54) **INFORMATION PROCESSING DEVICE, INFORMATION PROCESSING METHOD, AND PROGRAM**

(30) Priority: 24.02.2023 JP 2023027345
(71) Applicant: Morgenrot Inc., Tokyo 102-0083 (JP)
(72) Inventor: MORIMOTO Ryuei, Tokyo 102-0083 (JP); NISHIMOTO Masakazu, Tokyo 102-0083 (JP); NAKAMURA Masamichi, Tokyo 102-0083 (JP); ITO Hiroshi, Tokyo 102-0083 (JP); KOYAMA Saori, Tokyo 102-0083 (JP)
(74) Representative: Appleyard Lees IP LLP
(86) International application number: PCT/JP2024/006621
(87) International publication number: WO 2024/177150

(57) **Abstract**

The present invention improves the convenience of job schedule management in distributed processing. A master server 1 comprises a job acquisition unit 21, a job assignment unit 22, and a time slot display control unit 25. The job acquisition unit 21 acquires at least one job from each of performer terminals 3-1 to 3-m. The job assignment unit 22 implements processing for assigning at least one job as a job assignment to at least one assignee, which is at least one of job execution servers 2-1 to 2-n, in each of a plurality of predetermined time slots. The time slot display control unit 25 performs control to display a heat map in which a plurality of time band areas respectively indicating the plurality of predetermined time slots are displayed in display modes that are varied in accordance with the operating ratio of the job execution server 2 that may vary in nature or degree depending on the time band for each group or job, for example.

## Description

### TECHNICAL FIELD

The present invention relates to an information processing device, an information processing method, and a program.

### BACKGROUND ART

Conventionally, distributed processing which distributes several jobs to be executed by a plurality of servers have been carried out (for example, Patent Document 1).

### Citation List

### Patent Document

Patent Document 1: Japanese Unexamined Patent Application, Publication No. 2020-095340

### DISCLOSURE OF THE INVENTION

### Problems to be Solved by the Invention

In recent years, an improvement has been demanded in the convenience of schedule processing of jobs in distributed processing. However, the situation has been that such demand has not been sufficiently answered by only the aforementioned conventional technology.

The present invention has been made taking account of such a situation, and has an object of improving the convenience of schedule processing of jobs in distributed processing.

### Means for Solving the Problems

In order to achieve the above object, an information processing device according to an aspect of the present invention includes:
a job acquisition means for acquiring, from each of one or more client devices on a client side performing a calculation request for a predetermined job, one or more of the job;
a job allocation means for conducting, as job allocation in each of a plurality of predetermined time slots, processing of defining at least part of a plurality of calculation execution devices as an allocation destination, and allocating the one or more of the job to the allocation destination; and
a first display control means for executing control of variably displaying a display mode of a plurality of time slot regions indicating each of the plurality of the predetermined time slots, according to a predetermined element for which a content or extent is variable according to time slot, for a predetermined unit including one or more of the plurality of calculation execution devices.

An information processing method and a program according to an aspect of the present invention are respectively a method and program corresponding to the information processing system according to the aforementioned aspect of the present invention.

### Effects of the Invention

According to the present invention, it is possible to improve the convenience of schedule processing of jobs in distributed processing.

### BRIEF DESCRIPTION OF THE DRAWINGS

FIG. 1 is a view showing a configuration example of a distributed processing system including a master server which is an embodiment of an information processing device according to the present invention;
FIG. 2 is a block diagram showing an example of a hardware configuration of the master server in the distributed processing system of FIG. 1;
FIG. 3 is a functional block diagram showing a functional configuration example of the master server of FIG. 2;
FIG. 4 is a flowchart showing an example of operation of a master server including the functional configuration of FIG. 3;
FIG. 5 is a view showing an example of a screen provided by the master server of FIGS. 2 and 3, in which the usage rates (operating rates) of a job execution server are color coded as a heat map;
FIG. 6 is a view showing an example of a screen provided by the master server of FIGS. 2 and 3, in which the display of the heat map can be switched by designating a job execution server;
FIG. 7 is a view showing an example of a screen provided by the master server of FIGS. 2 and 3, in which the operating rates of the job execution servers in a specific group unit on a specific day are displayed as a heat map;
FIG. 8 is a view showing an example of a screen provided by the master server of FIGS. 2 and 3, in which the operating rates in specific job execution server units on a specific day are displayed as a heat map;
FIG. 9 is a view showing an example of a screen provided by the master server of FIGS. 2 and 3, in which the job execution status (operating rate) in specific user group units on a specific day are displayed as a heat map;
FIG. 10 is a view showing an example of a screen provided by the master server of FIGS. 2 and 3, in which the job execution status (operating rate) in specific user units on a specific day are displayed as a heat map;
FIG. 11 is a view showing an example of a screen of a job calendar provided by the master server of FIGS. 2 and 3;
FIG. 12 is a view showing an example of a screen displaying a job calendar displayed in week units among screens of the job calendar provided by the master server of FIGS. 2 and 3;
FIG. 13 is a view showing an example of a job calendar aggregating the jobs for every time slot among screens of job calendars provided by the master server of FIGS. 2 and 3;
FIG. 14 is a view showing detailed information displayed by mouse over a job column displayed on the job calendar of FIG. 13;
FIG. 15 is a view showing information displayed by checking a check box arranged in the job calendar on the job calendar screen provided by the master server of FIGS. 2 and 3;
FIG. 16 is a view showing the screen of a job calendar changed from the job calendar of week units of FIG. 15 to a job calendar of day units;
FIG. 17 is a view showing a job submission screen displayed as a pop-up on the job calendar of FIG. 16;
FIG. 18 is a view showing a new job registration screen displayed by a new job registration operation on the job submission screen of FIG. 17;
FIG. 19 is a view showing menu items of functions provided by the master server of FIGS. 2 and 3;
FIG. 20 is a view showing a server management screen of currently contracted cloud servers displayed by operating an item of a cloud cooperation function ("M: Cloud" button) among the menu items of FIG. 19;
FIG. 21 is a view showing a detail screen of a cloud server selected on the server management screen of FIG. 20;
FIG. 22 is a view showing a server stop pop-up screen displayed by a stop operation on the detail screen of FIG. 21;
FIG. 23 is a view showing an error during server stop pop-up screen displayed by a stop operation on the detail screen of FIG. 21;
FIG. 24 is a view showing a server group selection screen displayed by operating an "Add Server" button for making an addition of a new cloud server on the server management screen of FIG. 20;
FIG. 25 is a view showing a server group detail screen displaying detailed information of a server group selected on the server group selection screen of FIG. 24;
FIG. 26 is a view showing a selection screen of an additional server selected on the server group detail screen of FIG. 25;
FIG. 27 is a view showing an addition setting screen for an additional server selected on the selection screen of an additional server of FIG. 26;
FIG. 28 is a view showing an addition confirmation screen for an additional server set on the addition setting screen of FIG. 27;
FIG. 29 is a view showing an error pop-up screen displayed when there is a deficiency in conditions on the addition confirmation screen of FIG. 28;
FIG. 30 is a view showing a final confirmation pop-up screen displayed upon activating a server conforming to the conditions on the addition confirmation screen of FIG. 28;
FIG. 31 is a view showing a "Price History" button of an item of a fee management function, among menu items of functions provided by the master server of FIGS. 2 and 3;
FIG. 32 is a view showing a fee group selection screen displayed upon the "Price History" button of FIG. 31 being click operated; and
FIG. 33 is a view showing a detail screen on which detailed information of a server group selected on the fee group selection screen of FIG. 32 is displayed.

### PREFERRED MODE FOR CARRYING OUT THE INVENTION

Hereinafter, an embodiment of the present invention will be explained while referencing the drawings as appropriate.

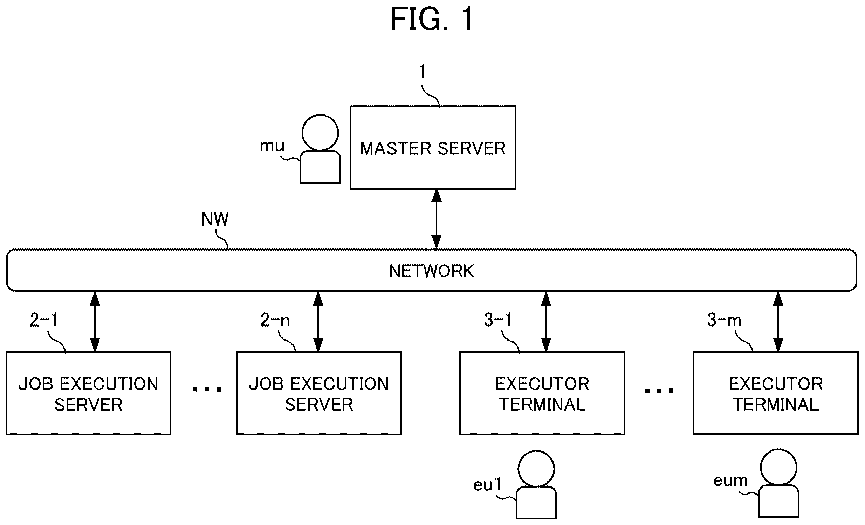

FIG. 1 is a view showing a configuration example of a distributed processing system including a master server which is an embodiment of an information processing device according to the present invention.

The distributed processing system shown in FIG. 1 is configured by a master server 1 managed by a manager mu, n-number (n is an integer value of 1 or more) of job execution servers 2-1 to 2-n, and executor terminals 3-1 to 3-m managed by each of m-number (m is an integer value of 1 or more) of calculation executors eu1 to eum being communicably connected to each other via a predetermined network NW.

It should be noted that, in the case of not being necessary to individually distinguish a plurality of units or plurality of individuals, the respective terminology is invoked as follows. In other words, the job execution servers 2-1 to 2-n are collectively called "distributed processing master servers. 2". The executor terminals 3-1 to 3-m are collectively called "executor terminals 3". The calculation executors eu1 to eum are collectively called "calculation executors eu".

The distributed processing system of FIG. 1 having such a configuration can efficiently and optimally distribute jobs to a plurality of calculation resources, and execute calculations fairly, upon submitting jobs provided from the calculation executors eu. Herein, job refers to arithmetic processing in rendering, machine learning including deep learning, fluid and structural simulation scientific calculation, or a series of such processing.

In addition, the calculation resources to which each job distributed by the distributed processing system of FIG. 1 is respectively allocated are a plurality of the job execution servers 2 installed in physically separated spaces.

For the plurality of job execution servers 2, so long as IP communication is available such as VPN connection after installation on LAN, server publication on DMZ, the installation location may be anywhere. In other words, the job execution servers 2 are able to be installed flexibly regardless of being on-premise or a cloud. Furthermore, the job execution servers 2 may be machines provided from a third party. Additionally, the job execution server 2 may be a composite of these machines. For example, the job execution server 2 may be an execution server configured by only on-premises managed by the manager mu, may be an execution server configured by only an environment established on a cloud, or may be an execution server configured only by a machine provided from a third party. Furthermore, the job execution servers 2 may be execution servers configured by on-premise and cloud machines, may be an execution server configured by machines on-premise and provided from a third party, or may be an execution server configured by machines provided on a cloud and from a third party. In addition, the job execution server 2 may be an execution server configured by machines on-premise, on a cloud and provided from a third party. The on-premise and cloud differ in the cost of management, and the optimal configuration differs according to the application of the manager mu. The appropriateness of whether or not to use a server provided by a third party, varies depending on conditions such as the security policy of the manager mu, the budget, etc. The present invention is able to combine such complex demands and environments to establish a job execution server 2 without imposing a burden on the user. This matter is realized by the master server, etc. described below. According to the present invention, by being able to use without distinguishing the installation state such as on-premise and cloud, it is possible to simplify or omit server selection in the course of the calculation executor eu, who normally carries out this conventionally, selecting servers to execute calculation. The job execution server 2 connects directly (InfiniBand, PCIE connection, or external) with storage (not shown), or through VPN, and performs temporary data storage.

In addition, in the distributed processing system of FIG. 1, the master server 1 monitors the states of the plurality of job execution servers 2. One of the master servers 1 is established for each of the management units m in the example of FIG. 1: however, it is not to be particularly limited to this. In other words, there may be a single or a plurality of the master servers 1 in the network NW. In the case of there being one or a few master servers 1 for every management unit, it is possible to reduce the capital investment, and possible to simply perform all monitoring related to calculation executors, respective jobs, etc. In the case of the master servers 1 being a plurality or many for each of the management units, it is effective in function retention relative to the stopping/breakdown of part of the master servers 1, function maintenance relative to access load growth of many calculation performers eu, etc. In the case of a plurality of master servers 1 existing, it is possible to determine the priority among the master servers 1 based on a predetermined algorithm, and a master servers 1 having low priority can follow the instruction of a master server 1 having high priority. The priority at this time may be fixed from when first installed, or may vary with time. Thereby, for example, with the viewpoint of N types of indicators described later, in the case of the suitability of the job execution server 2 managed by the master server 1 being predicted in advance, or a case of the suitability being determinable in the course of submitting, executing, completion, etc. of the job, it is possible to allocate the job appropriately to a job execution server 2.

In such a distributed processing system of FIG. 1, the calculation executor eu can operate the executor terminal 3 to access the master server 1, and make a request for execution of a predetermined job. In other words, upon the executor terminal 3 requesting execution of a job, it is sufficient if able to access the master server 1 via IP communication such as the internet. Thereby, a distributed instruction operation by the calculation executor eu himself/herself is unnecessary, and the execution of a job involving distributed processing is started in the distributed processing system of FIG. 1.

The master server 1 coordinates with the executor terminal 3 and job execution server 2 via IP communication, and allocates and causes a job sent from the executor terminal 3 to be executed in a job execution server 2 suited to executing this job, among the plurality of job execution servers 2 on the network NW, according to the request from the executor terminal 3. In other words, the master server 1 acquires a job sent from the executor terminal 3, sets one or more among the plurality of job execution servers 2 as allocation destinations, allocates this job and transfers to this one or more allocation destinations to execute the job. It should be noted that the master server 1 naturally can set one job execution server 2 in a certain group as the allocation destination similarly to as conventional, and further can also set a job execution server 2 belonging to another different group as an allocation destination as necessary. Each of the plurality of job execution servers 2 set as the allocation destination by the master server 1 executes the job allocated by this master server 1.

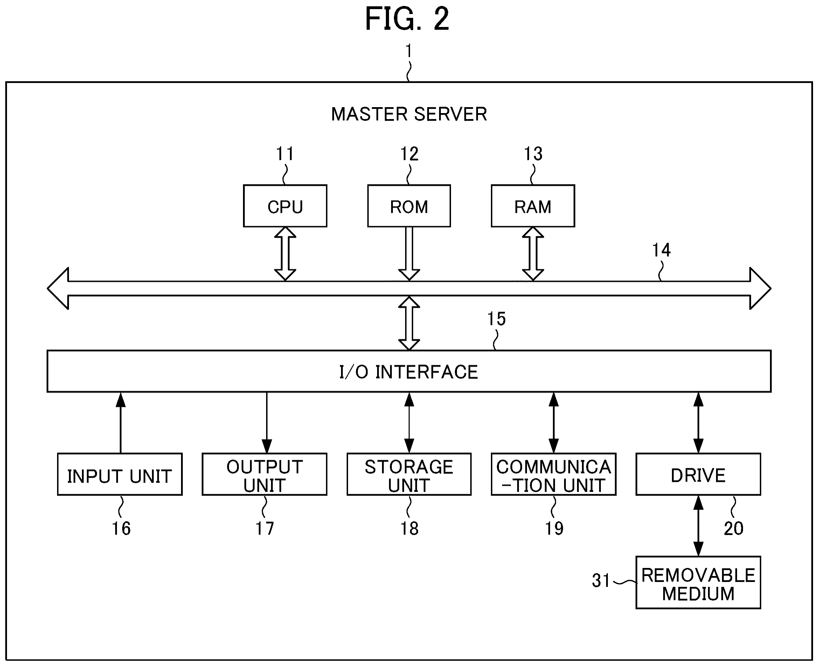

FIG. 2 is a block diagram showing an example of the hardware configuration of master servers in the distributed processing system of FIG. 1.

The master server 1 includes a CPU 11 (Central Processing Unit), ROM 12 (Read Only Memory), RAM 13 (Random Access Memory), a bus 14, an I/O interface 15, an input unit 16, an output unit 17, a storage unit 18, a communication unit 19 and a drive 20.

The CPU 11 executes various processing in accordance with programs recorded in the ROM 12, or programs loaded into the RAM 13 from the storage unit 18. The data, etc. required upon the CPU 11 executing various processing is stored as appropriate in the RAM 13.

The CPU 11, ROM 12 and RAM 13 are connected to each other via the bus 14. The I/O interface 15 is also connected to this bus 14. The input unit 16, output unit 17, storage unit 18, communication unit 19 and drive 20 are connected to the I/O interface 15.

The input unit 16 is configured by various hardware buttons, etc., and inputs various information according to instruction operations of an operator. The output unit 17 is configured by a display such as liquid crystal, and displays various images.

The storage unit 18 is configured by DRAM (Dynamic Random Access Memory), etc., and stores various data. The communication unit 19 controls communication with other devices (e.g., job execution servers 2 and executor terminals 3) via a network NW including the internet.

The drive 20 is provided as necessary. A removable medium 31 consisting of a magnetic disk, an optical disk, a magneto-optical disk, semiconductor memory or the like is fitted to the drive 20. The programs read out from the removable medium 31 by the drive 20 are installed to the storage unit 18 as necessary. In addition, similarly to the storage unit 18, the removable medium 31 can also store the various data stored in the storage unit 18.

It should be noted that, although not illustrated, the job execution server 2 and the executor terminal 3 in the distributed processing system of FIG. 2 also have the hardware configuration shown in FIG. 2. In addition, the job execution server 2 is basically the same as the hardware configuration shown in FIG. 2; however, there are also cases of it including one or more GPUs (Graphics Processing Unit), in addition to the one or more CPUs 11. In addition, there are also cases where the job execution server 2 includes optional operation units such as an NPU (Neural Network Processing Unit), TPU (Tensor Processing Unit), and QPU (Quantum Processing Unit).

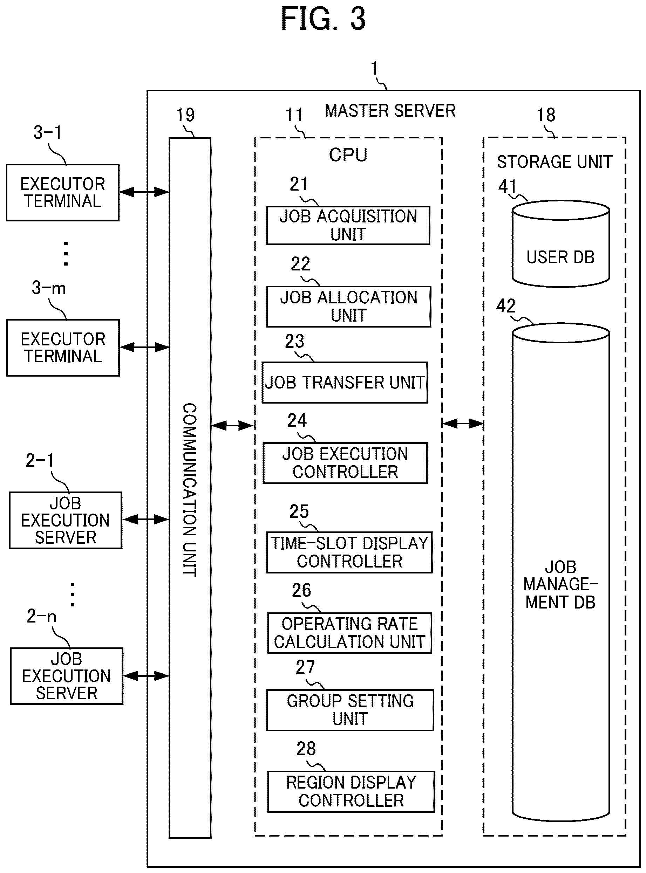

FIG. 3 is a functional block diagram showing a functional configuration example of the master server in FIG. 2. As shown in FIG. 3, a user DB 41 and a job management DB 42 are stored in the storage unit 18 of the master server 1.

In the user DB 41, information related to the manager mu or calculation executor em (for example, name, account information (login ID, password), group to which belonging, etc.) is stored. In the job management DB 42, information including one or more jobs acquired by the job acquisition unit 21, an allocation destination (job execution server 2) of a job allocated by the job allocation unit 22, an execution schedule of jobs (also including execution scheduling of jobs), and execution results of jobs are stored. Additionally, in the job management DB 42, information related to all job execution servers 2 controlled by the master server 1 (device name, device ID, specification, operating information of each device (usage rate of CPU and memory, operating rate calculated from usage rate of each device, heat map display information (relationship between operating rate and background color of cell, etc.), graph showing jobs in execution, job execution end, etc.) is stored. The state of a job can be confirmed by checking the flag.

As shown in FIG. 3, upon executing distributed processing, a job acquisition unit 21, job allocation unit 22, job transfer unit 23, job execution controller 24, time-slot display controller 25, operating rate calculation unit 26, group setting unit 27, and region display controller 28 function in the CPU 11 of the master server 1. Each of these units execute processing while writing and/or reading information to the user DB 41 and/or job management DB 42 of the storage unit 18 upon executing distributed processing.

The job acquisition unit 21 acquires one or more jobs from each of the executor terminals 3-1 to 3-m. More specifically, the job acquisition unit 21 acquires one or more jobs sent from each of the one or more executor terminals 3, and stores these one or more jobs in the job management DB 42 of the storage unit 18.

As job allocation, the job allocation unit 22 carries out, in each of a plurality of predetermined time slots, processing of defining at least part of job execution servers 2-1 to 2-n as an allocation destination, and allocating one or more jobs to the allocation destination. The job allocation unit 22 achieves optimization of jobs, by carrying out job allocation with various indicators such as information of the job execution server 2 which is the allocation destination as constraints, on the one or more jobs stored in the job management DB 42, at a predetermined timing such as the timing at which the job allocation request arrived. Herein, "job allocation" indicates setting the allocation destination of a job from among a plurality of the job execution servers 2.

The job transfer unit 23 distributes and transfers the one or more jobs to the plurality of job execution servers 2 set as allocation destinations, in accordance with the job allocation. More specifically, the job transfer unit 23 reads out a target job from the job management DB 42 in accordance with the job allocation allocated by the job allocation unit 22, and transfers this job to the job execution server 2 set as the allocation destination.

The job execution controller 24 controls the executing the one or more jobs by a plurality of job execution servers 2 set as the allocation destinations.

The aforementioned job allocation unit 22 may conduct the job allocation such that submits (transfers) jobs immediately in the order of receiving the jobs, in consideration of the indicators shown below. In addition, the job allocation unit 22 may perform job allocation such that sets a fixed time and performs acceptance of jobs, and conducts optimization on the plurality of jobs accepted at any time. Additionally, the job allocation unit 22 may conduct job allocation such that provides a queue jumping constraint and immediately executes a job satisfying the condition, even if a scheduled job is already in progress.

Furthermore, the details of job allocation by the job allocation unit 22 will be described below. The job allocation unit 22 can achieve optimization of jobs, by executing job allocation based on M-types (M is an integer value no great than N) of indicators, among the predetermined N-types (N is an integer value or 2 or less) of indicators.

Herein, the N-types of indicators are not particularly limited; however, the following such indicators can be employed. For example, it is possible to employ the specifications (CPU, GPU, memory, etc.) of the job execution server 2 which is a candidate for allocation destination as indicators. For example, it is possible to employ the communication rate of the network to which the job execution server 2 is connected as the indicator. For example, it is possible to employ information related to the device settings of the job execution server 2 (security information, OS, implementation compiler, etc.) as the indicator. For example, it is possible to employ information of the power supply for the job execution server 2 (stability of power supply, whether or not renewable energy, etc.) as the indicator. For example, it is possible to employ geographical information of the installation location of the job execution server 2 (policy of data handling of local government and management organization, climate and air conditioning environment impacting server operating temperature) as the indicator. For example, it is possible to employ the execution efficiency and execution rate of a job as indicators. For example, it is possible to employ operational performance of the job execution server 2 as an indicator. For example, it is possible to employ the classification of the owner (manager mu, etc.) of the job execution server 2 as an indicator. For example, it is possible to employ the classification of the owner of the job (calculation executor eu, etc.) as the indicator. For example, it is possible to employ the time and date of an installation location of the job execution server 2 as the indicator. More specifically, for example, an input field of date or time (calendar or character input format) is presented to the calculation executor eu, and the job allocation may be made by the job allocation unit 22 with the time and date designated by the calculation executor eu (for example, date and time of start or end of the job) as the indicator.

The M-types of indicators used in optimization (job allocation) may be a specific one among the aforementioned N-types of indicators, but may be a plurality of types. In the case of using a plurality of types of indicators, the job allocation unit 22 can perform optimization (job allocation) of jobs by combining a plurality of types of indicators according to arbitrary weighting. This weighting may be determined automatically using an arbitrary algorithm. In addition, a part or the entirety of the M types may be determined by an arbitrary input.

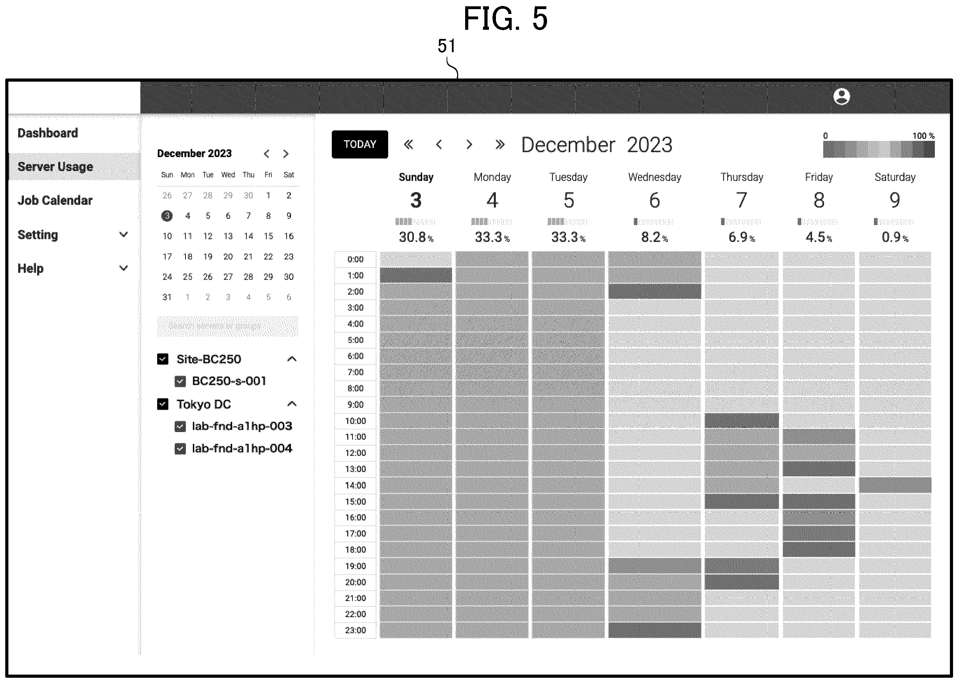

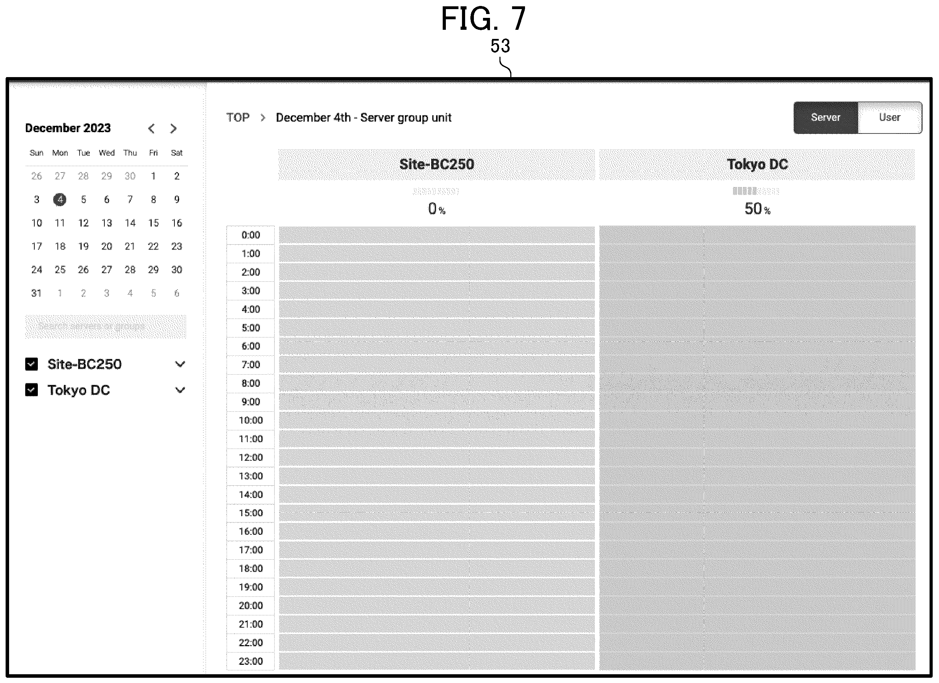

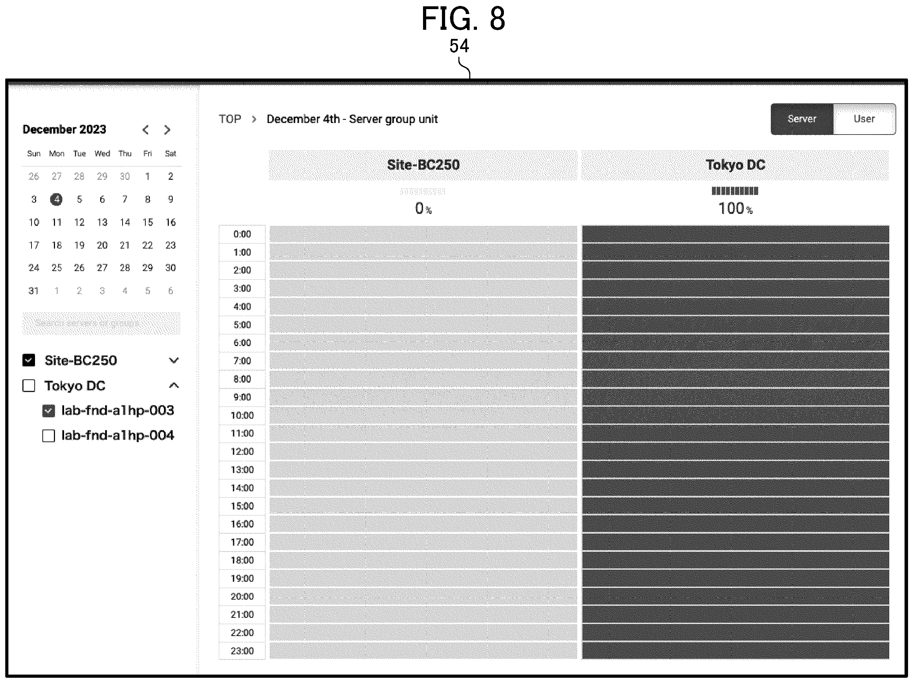

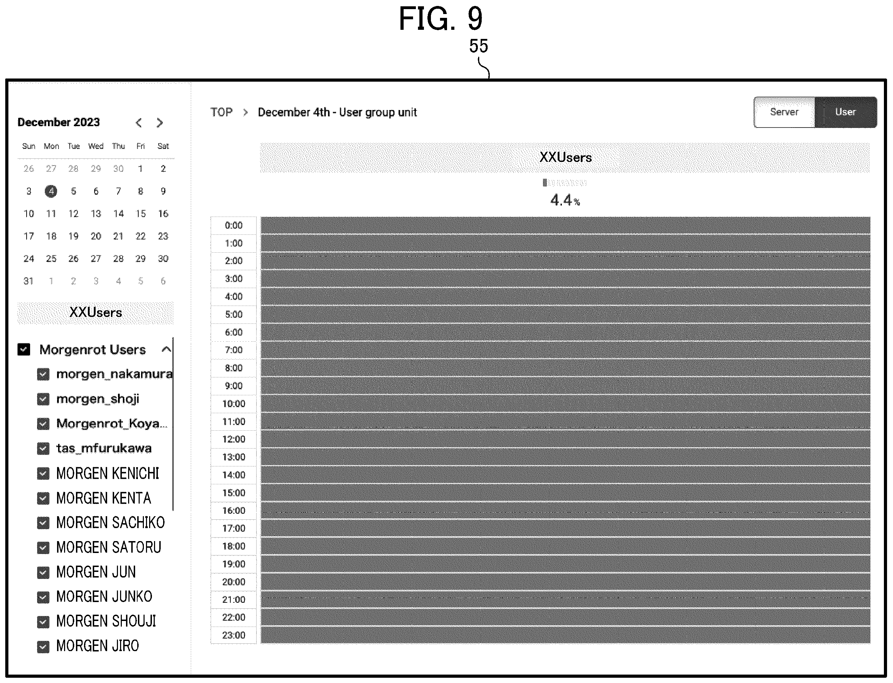

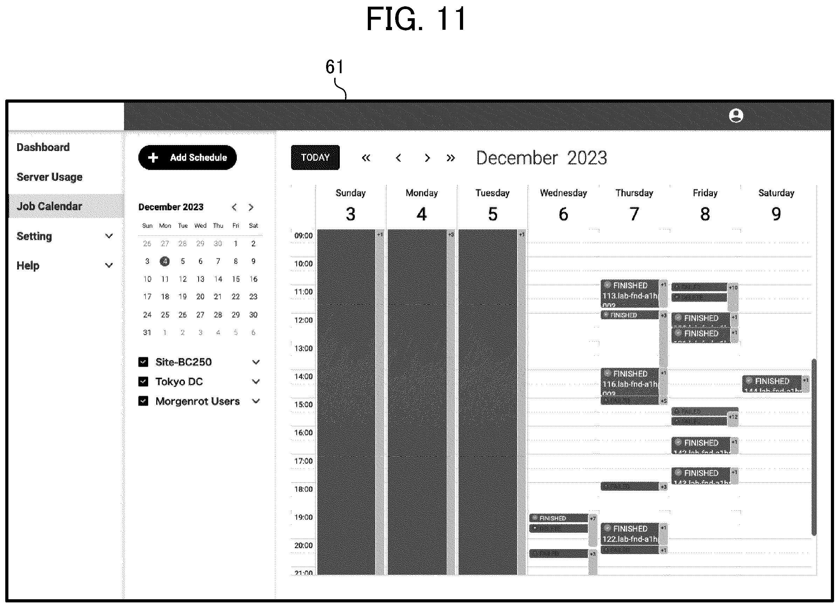

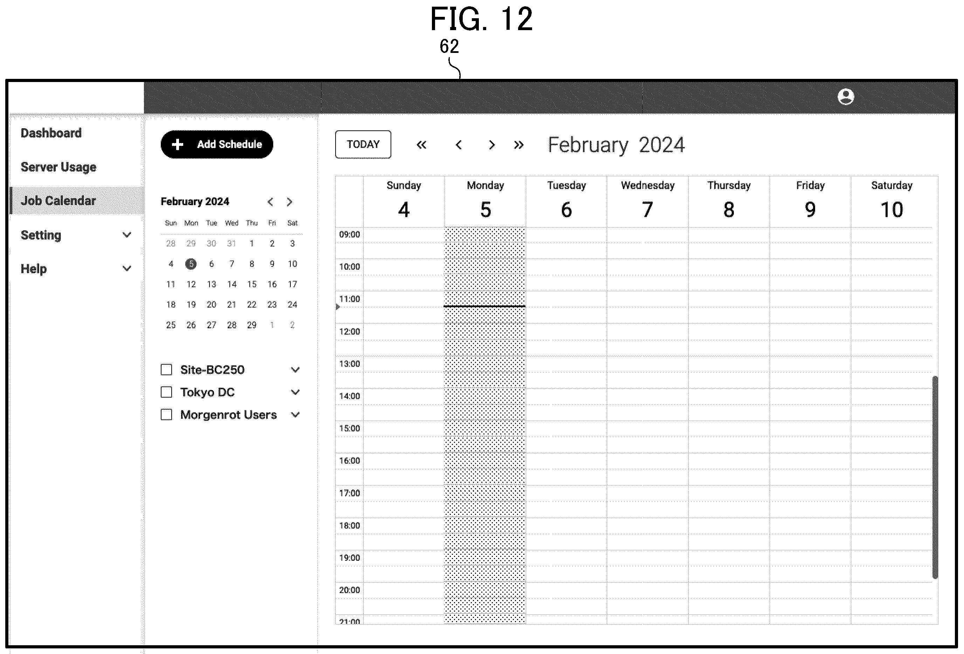

The time-slot display controller 25 executes control of displaying a heat map (for example, refer to FIG. 5) for every unit for the plurality of time slot regions (cells) in the job calendar, according to the operating rate (element) of the job execution server 2. FIG. 5 shows the heat map according to the operating rate of a single selected job execution server 2. The operating rate of the job execution server 2 is considered as the usage rate as seen from the user. The element includes contents, etc. of the job other than the operating rate. More specifically, the time-slot display controller 25 executes control of variably displaying the display mode of a plurality of cells indicating each of the plurality of predetermined time slots according to contents or the operating rate of the job execution server 2 for which the extent is variable, depending on the time slot, for every unit, for example, every group or every job. Varying the display mode more specifically is processing of changing the background color of the cells and, for example, sets the background color of a cell of a time slot having high operating rate as red, and sets the background color of a cell having low operating rate as green. Herein, although the background color is varied, in addition to this, the text color, etc. may be varied, and it is sufficient if the change in operating rate for every time slot is visually understood therefrom. The time-slot display controller 25 adopts an operating state computed by the operating rate calculation unit 26, for example, as a predetermined element, and executes control for variably displaying the display mode of the plurality of cells indicating each of the plurality of predetermined time slots. The above-mentioned heat map can be displayed in the selected group unit according to the checked contents of the checked items (for example, refer to FIG. 5). FIG. 5 shows a heat map of server group units constituted from a plurality of job execution servers 2. In addition, as the heat map, the respective heat maps of all users, a user group including a plurality of users, or a specific user can be displayed by switching the state of display/non-display by a screen operation. For example, from the heat map of all users, it is possible to switch to the heat map of the user group including a plurality of users and display, in one click operation by the mouse (refer to FIGS. 7 and 9). In addition, the time-slot display controller 25 adopts the contents of a job allocated to a predetermined unit as a predetermined element, and executes control of variably displaying the display mode of the plurality of cells indicating each of the plurality of predetermined time slots (for example, refer to FIGS. 11 and 12). In FIG. 11, the contents of jobs are described in each cell. In FIG. 12, the present day on which the job is executed is shown in a different color than other days (for example, cream color), and a horizontal line (also referred to as a solid line, bar, etc.) is shown at the current time. The time-slot display controller 25 executes control of displaying a plurality of time slot regions side-by-side for each of the plurality of groups (predetermined units) (for example, refer to FIGS. 7 and 8). FIG. 7 displays the operating rates of two different server groups side-by-side. FIG. 8 displays the operating rate of a singular server included in each server group by a selection operation of a desired server group among the server groups in FIG. 7. The plurality of time slot regions is made by dividing one day into every predetermined time (for example, 1 hour), and the time-slot display controller 25 can cause the plurality of time slot regions to be displayed by arranging side-by-side for N days (N is an integer value of 1 or more, and is a variable value). More specifically, for example, the plurality of time slot regions are arranged and displayed side-by-side for 7 days (1 week), or displayed side-by-side for 1 day.

The operating rate calculation unit 26 calculates the operating rate for a predetermined unit such as for every group or every job in accordance with the job allocation, in each of the plurality of predetermined time slots. A known calculation method can be used for the calculation of the operating rate. For example, by referencing logs of the OS or middleware of the server, or logs of a known job management tool installed in this server, or logs of various software executed by this server, to grasp the execution state of a job, the operating rate can be calculated by obtaining the ratio of how much the hardware configuration (CPU, GPU, memory, power supply, storage, data transceiving device, etc.) of this server is operating. Herein, the target of calculation is not necessarily limited to the operating rate already given, and can be replaced with a value beneficial in the understanding of the status of the server. For example, in the case of adopting the CPU, the target of calculation can be defined as any one or a plurality among the operating CPU core number relative to the total CPU core number, operating CPU thread number relative to the total CPU thread number, operating ratio of a CPU core (1 core) of any ID (e.g., defined as 0 - 100%), average operating CPU core number (and operating rate) in arbitrary time units (1 minute, 1 hour, etc.) or average operating ratio of CPU core of arbitrary ID (and operating rate), active ratio of CPU core of arbitrary ID (monitoring may be difficult due to malfunction or the like), etc. By dealing with the desired calculation results, it is possible to grasp the details of the server state, and it is possible to realize efficient operation of the hardware overall, and facilitation of factor analysis during failure occurrence.

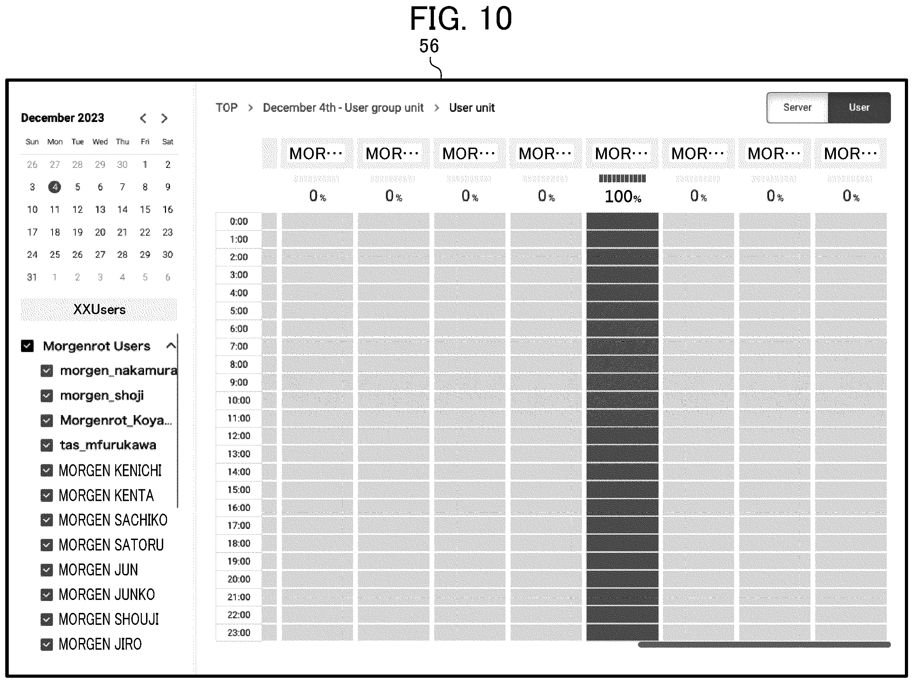

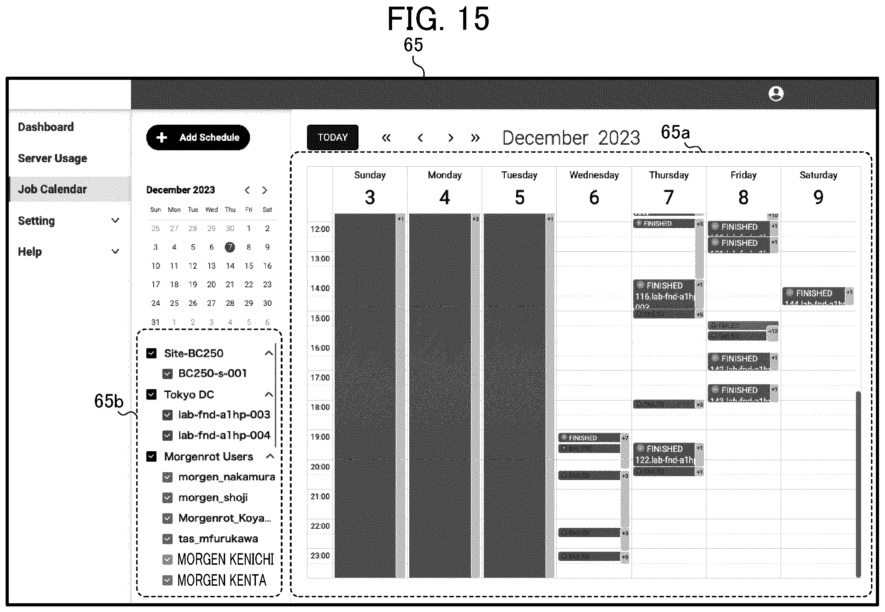

The group setting unit 27 sets, as group units (predetermined units), one or more groups obtained as a result of grouping a plurality of job execution servers 2-1 to 2-n and/or calculation executors eu, in accordance with the location or performance, purpose, etc. (predetermined system), for example (refer to FIGS. 9, 10 and 15, for example). FIG. 9 shows a display example of the result of performing setting to display the operating rate in user group units, FIG. 10 shows a display example of the result of performing setting to display operating rate in user units, and FIG. 15 shows a display example in which the user group units and server group units are switchably set by operation of a check box. It should be noted that a case of there only being one job execution server 2 is also referred to as group. In other words, a group with only one job execution server 2 also exists.

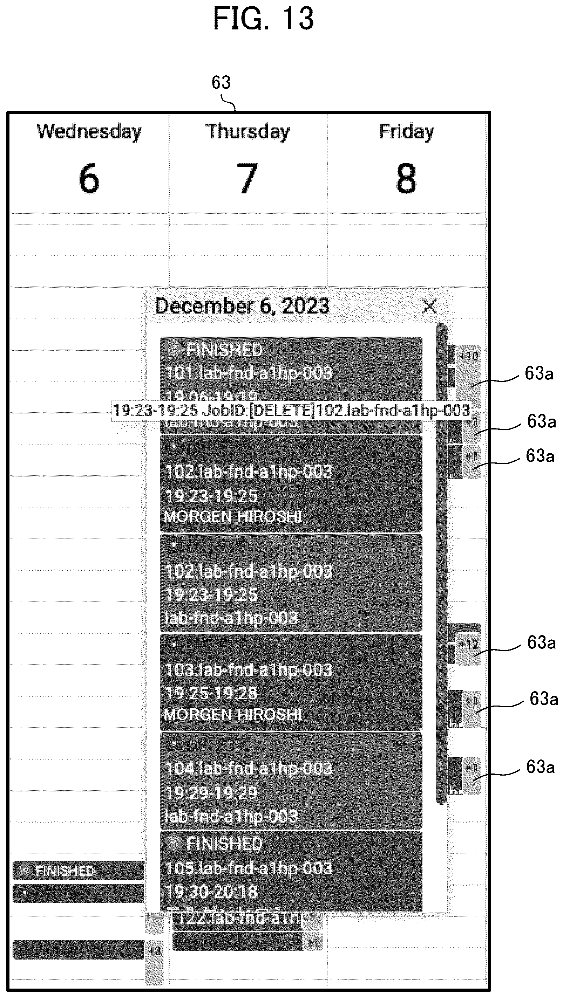

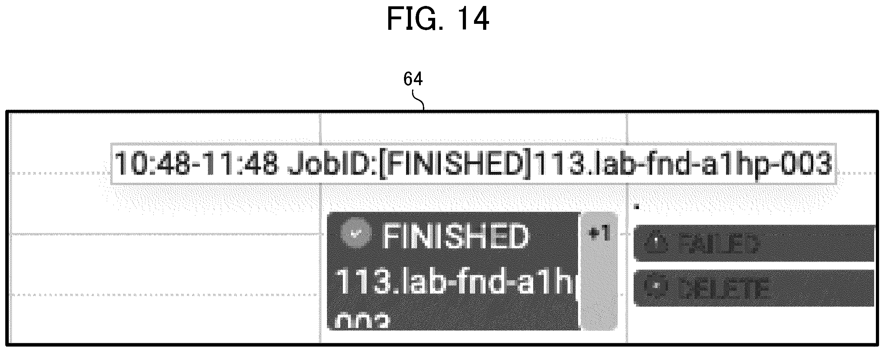

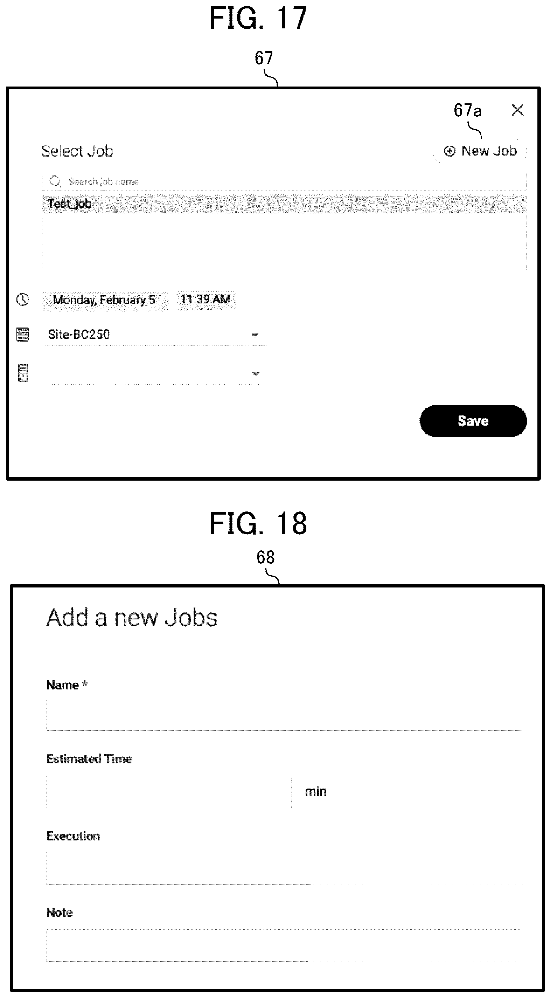

The region display controller 28, in the case of a predetermined time slot region being selected among the plurality of time slot regions, executes control to display a separate region in which information related to this predetermined time slot region is displayed (for example, refer to FIGS. 13, 14, 17 and 18). FIG. 13 shows an example of a job calendar in which a plurality of jobs are displayed together, FIG. 14 shows a display example of detailed information of a job displayed in a separate region by mouse overing a desired time slot of the job calendar in FIG. 13, FIG. 17 shows an example of a job submission screen for setting a job, and FIG. 18 shows an example of a new job registration screen (scheduling new job) displayed by transitioning from FIG. 17.

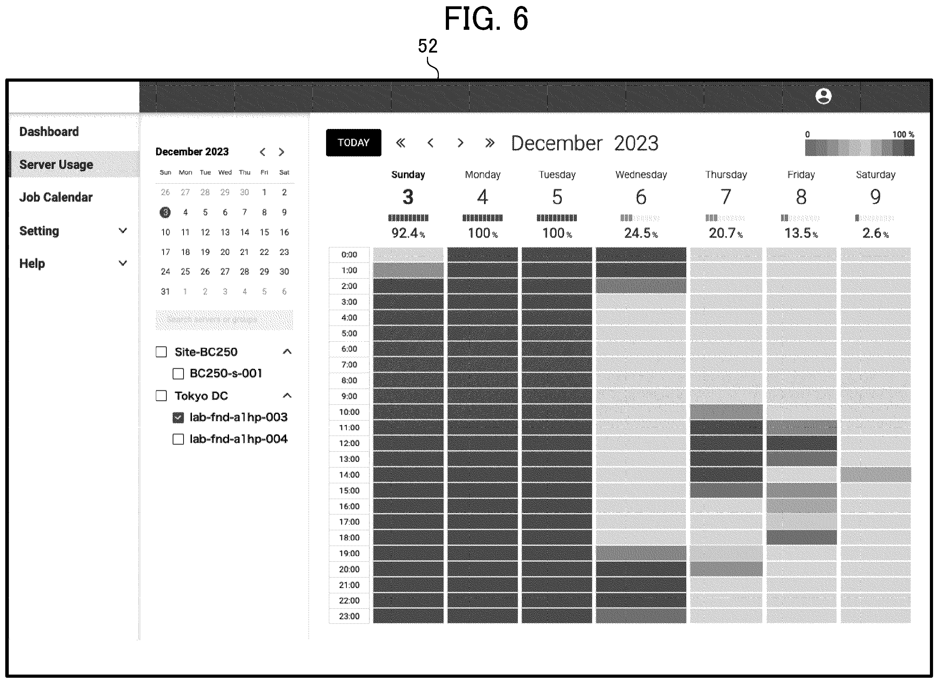

Hereinafter, various display examples (display modes) of the job calendar display functions by the master server will be described by referencing FIGS. 5 to 10. First, a display mode in which the usage rates (operating rates) of the job execution servers are color coded as a heat map will be described by referencing FIGS. 5 to 10. FIG. 5 is a view showing an example of a screen provided by the master server of FIGS. 2 and 3, in which the usage rates (operating rates) of the job execution servers are color coded as a heat map. FIG. 6 is a view showing an example of a screen provided by the master server of FIGS. 2 and 3, in which the display of the heat map is switchable by designating a job execution server. FIG. 7 is a view showing an example of a screen provided by the master server of FIGS. 2 and 3, in which the operating rates of the job execution servers in specific group units on a specific day are displayed as a heat map. FIG. 8 is a view showing an example of a screen provided by the master server of FIGS. 2 and 3, in which the operating rates of predetermined job execution server units on a specific day are displayed as a heat map. FIG. 9 is a view showing an example of a screen provided by the master server of FIGS. 2 and 3, in which the job execution status (operating rate) in a specific user group unit on a specific day are displayed as a heat map. FIG. 10 is a view showing an example of a screen provided by the master server of FIGS. 2 and 3, in which the job execution status (operating rate) in a specific user unit on a specific day are displayed as a heat map.

The top screen 51 shown in FIG. 5 is provided with a heat map color coding in a mode of a table showing the usage rate (operating rate) of the job execution server, a column of menu items arranged on the left side of the heat map, and a small-scale calendar arranged at the upper left of the screen. In the column of menu items, the items of functions such as dashboard (Dashboard), server usage (Server Usage), job calendar (Job Calendar), settings (Setting), and help (Help) are arranged. In addition, other items (for example, cloud cooperation function (M: Cloud), etc.) are also displayable from a pulldown menu. By selectively operating a desired item among the menu items, information is displayed at a central portion of the screen by this selected function. In the example of this top screen 51, by selectively operating the item of the Server Usage, for example, the heat map display function (mainly function of time-slot display controller 25) operates, information required in heat map creation (usage rate (operating rate) of job execution server, etc.) is read from the job management DB 42, and a heat map according to the usage rate (operating rate) of the job execution server is displayed at the center portion of the screen.

By the operator selectively operating a desired date in the small-scale calendar, the top screen 51 shows the usage rate (operating rate) of the job execution server 2 on this day or before/after this day in a table mode, in which the vertical axis is the time slot (time) and the horizontal axis is the date (day of the week), and cells are arranged in parts where the axes intersect with each other. This top screen 51 is presented to every operator such as the managers mu and calculation executors eu. In the top screen 51, it is possible to display, to the manager mu of the server, information such as the operating rate and the job execution time of calculation executor eu (user) in a time series such as every month, every day, and every hour. Display on the top screen 51 is also possible for statistical information which is not a time series. The information to be displayed can be selected arbitrarily by the manager mu of the master server 1.

The heat map displayed at the center portion of the screen of the top screen 51 is switchable to display in various ways, such as every hour, every day of the week, and every date and time. The heat map is displayed by changing the background color of cells so that the aspect of the usage rate (operating rate) of the job execution server changing with time is visibly understood. The colors of the heat map (background colors of cells) are set by the color and operating rate corresponding so that the operating rate rises from green to red, for example, green is defined as 0% and red is defined as 100%, and the color is varied in sequence from green to red according to the change in operating rate. In this example, the background color of the cell is set so as to vary in 10 stages. In the case of making evenly distributed settings, the background color is changed for every 10% rise in the operating rate. For the server state, there are various indicators such as indicators indicating a state related to the server itself such as the operating rate, power supply amount or consumption amount of the job execution server 2 itself, indicators related to the temperature inside the job execution server 2 or to elements constituting the job execution server 2 such as semiconductor components such as the CPU and GPU, and indicators related to environment such as the room temperature. The display of server state is dynamically updated in seconds or minutes units. By updating at a predetermined timing, the latest information of the job and server state are displayed. The predetermined timing can designate various timings, such as every minute, every hour, every half day, or an arbitrary time interval. In the case of expressing the server state in this way by varying the color for every time slot in a calendar format (table format), in addition to changing the background color of the cells as in this example, the color of the frame of the cells, or color of the text or symbols may be changed.

The table showing the usage rate (operating rate) in every time slot of one week is displayed at the center portion of the top screen 51, the calendar is arranged at an upper left portion, and a check box column is arranged below the calendar. In the check box column, check boxes are arranged for every group of the job execution servers 2, and every individual job execution server 2 of each group, and can be designated individually. In this example, groups such as "Site-BC250" and "Tokyo DC" are present, and the job execution server 2 called "bc250-s-001" belongs to "Site-BC250". The job execution servers 2 called "lab-fnd-a1hp-003" and "lab-fnd-a1hp-004" belong to "Tokyo DC". In this example, a check is placed in all check boxes of the groups and job execution servers 2, and the operating rate as the server system overall including all groups is displayed as a heat map.

In this top screen 51, when the manager mu clicks a desired date on the calendar by a mouse or the like, data of the execution status of jobs including the operating rate of the job execution servers 2 on this day is displayed. From the heat map display on this top screen 51, it is possible to easy grasp how much a job execution server 2 is operating. From the viewpoint of the manager mu, it is understood that the job is not being executed at the greyed-out times, and by establishing an operation method such that fills this portion, it is possible to raise the operating rate. It is possible to confirm the contents of the job and status of the calculation executor eu before and after, and consider more specific countermeasures.

From the viewpoint of the calculation executor eu, it is possible to grasp how many jobs are being executed at the current time or at a future time. In addition, it is possible to estimate how long ones own job will have to wait.

On the top screen 51, the submitted jobs are displayed in a calendar format of every hour, every day of the week, and every date and time, for users submitting jobs. In the calendar for users, the jobs submitted by a plurality of users other than oneself are displayed. In the case of the submitted jobs changing to a state such as cancelled, error or completed, it is notified to the user who submitted by pop-up notification, mail transmission or the like.

In the case of the job ending earlier than the scheduled time, it is possible to execute the next scheduled job ahead of schedule. In the case of the job being later than the estimated time, it is possible to delay the start time of the job scheduled next, and the next job can be executed as soon as the previous job completes. When the start or end time, or processing time is changed due to advancing, delaying, etc. of a job, it is reflected in the calendar each time.

In the case of the job entering an error state, the specific contents of the error related to job execution are displayed when mouse overing the error display where display of the error is made on the calendar. In the case of a job entering the error state, it is possible to execute the subsequent scheduled job ahead of schedule, or it is possible to accept corrections such as an input file related to the job in the error state, and execute again. In the case of a job entering the error state, which processing to perform next the manager mu or calculation executor eu can set which processing to be performed next by way of a setting operation from the setting screen.

Depending on the affiliated group of the job submission user, it is possible to schedule jobs with priority, and postpone other jobs. Information related to the state of the server is displayed according to permissions of the user group or server group. According to the state of the job, it is possible to display jobs in a plurality of modes, for example, it is possible to display as a total of 3 types of jobs, such as already prepared or successfully completed jobs, jobs in which an error occurred, and jobs for which the time frame is saved, and the input file is not yet prepared.

The screen 52 of the heat map on which the sole job execution server 2 called "lab-fnd-a1hp-003" shown in FIG. 6 is displayed, when performing an operation removing the check from a check box other than "lab-fnd-a1hp-003", for example, among the check boxes in the check box column on the top screen 51 of FIG. 5.

The job schedule of one week of the job execution server 2 is shown on the screen 52 of the heat map, and the operating status of the job execution server 2 is shown by the color of the cell for every time slot. In this example, the colors of the cells for every time slot from the day of the third to the day of the fifth are mostly red, whereby it is found that the operating rate of the target job execution server 2 called "lab-fnd-a1hp-003" is high.

The screen 52 shown in FIG. 6 shows an example of a detail screen of a group of users or individual among screens showing the operating rate (usage rate) of the job execution server 2. The heat map of calendar format can also display the plurality of job execution servers 2 in any of the units of all job execution servers 2, server group including a plurality of job execution servers 2, and specific individual server, and changes in the displayed contents are also possible.

Each heat map of all job execution servers 2, server group including a plurality of job execution servers 2, and specific individual job execution server 2 can switch the display/non-display state according to a screen operation. For example, it is possible to display a display screen of a server group including a plurality of the job execution servers 2 by one mouse click from the display screen of all job execution servers 2. Transition of the display is performed by an operation such as clicking or tapping on the day of the week or date on the calendar, or on the heat map.

By providing check boxes for group selection or job execution server 2 selection on the top screen 51 in this way, the manager mu or calculation executor eu can switch the display to the desired heat map display by the way of checking a check box. The heat map can display by switching to server group units or user group units; therefore, the manager mu or calculation executor eu can confirm the operating status of the job execution servers 2 in the desired group unit. Server clusters, differing by group, or information from different locations can easily be classified.

From the viewpoint of the manager mu, it is possible to easily grasp at which locations the job execution servers 2 are congested. By confirming with statistical information, it is possible to build countermeasures such as building up the number of the job execution servers 2, or changing the operation method.

From the viewpoint of the calculation executor eu, it is possible to confirm the congestion status of the job execution servers 2 for every location, and grasp if executing a job in which cluster, the job can be executed the fastest. When click operating any time slot on the top screen 51, a job submission screen 67 (refer to FIG. 17) is displayed, whereby job submission to an available server group can be easily executed. Furthermore, if selectively operating a desired date of the job schedule, since the screen transitions to the screen 53 (refer to FIG. 7) displaying the heat map in server group units on this selected date (one day), by the user confirming the operating status of the job execution servers 2 for every server group from the heat map displayed on this screen 53, it is possible to perform measures such as changing a job execution instruction to a job execution server 2 having a low operating rate, for example.

With the screen 53 shown on FIG. 7, when transitioning to the display of each date, the operating rate of every server group is displayed on the heat map. For the definitions of background colors in the heat map, those of the one-week display are assumed. As the display of the operating rate for each server group, the results of recalculating in the server group unit are displayed. The manager mu, calculation executor eu, or the like can easily grasp the operating rate per day in the server group unit from this heat map display. If clicking the calendar at the upper left, it is possible to change the date with this display remaining.

In the screen 53 shown in FIG. 7, if the manager mu or calculation executor eu click operates either of the "Server" button or "User" button arranged at the upper right portion of the screen, it is possible to change between server group and user group display modes. If the operator click operates the "User" button, for example, the display of the screen is switched from the server group unit to the user group unit. In this way, by the button operation, by being able to switching display of the screen between user group unit and server group unit, the operator can easily confirm which user specifically executed a job. When it is desired to switch from the user group unit to the server group unit, it is possible to return the screen to the display mode of the original server group unit (each job execution server 2 in the group) by click operating the "Server" button.

In the screen 53 of FIG. 7, if click operating the column of the name of any server group among the two server groups, it transitions to the screen 54 of the heat map display of the job execution server 2 unit in this server group, as shown in FIG. 8. In the screen 54 shown in FIG. 8, the operating rate of the job execution server 2 checked in the check box is displayed on the heat map for each of these server groups. In this example of FIG. 8, the check box of the server group of "Site-BC250" is checked, there is no check in the check box of the server group of "Tokyo DC", and the check box of the job execution server 2 called "lab-fnd-a1hp-003" in "Tokyo DC" is checked; however, as the heat map, the server groups of "Site-BC250" and "Tokyo DC" are displayed, and comparison is made by server group units. It is found that the server group of "Tokyo DC" is 100% operating rate as a group, with only the operating rate of "lab-fnd-a1hp-003". From the viewpoint of the manager mu, it is possible to confirm whether the jobs are evenly distributed to the job execution servers 2 in the server group. Herein, in the case of a faulty job execution server 2 being present, it is possible to specify the faulty job execution server 2 from the lowness of the operating rate or the like. From the viewpoint of the calculation executor eu, it is possible to appropriately set the proportion of distributing and submitting jobs to each job execution server 2, from the situation of the heat map displayed on the screen 54.

In the screen 53 of FIG. 7 or the screen 54 of FIG. 8, if the manager mu or the calculation executor eu click operates the "User" button, the screen transitions, and can change to a screen of heat map display in user group units. More specifically, when transitioning from server group to user group, the screen 55 shown in FIG. 9 is displayed. In the screen 55 shown in FIG. 9, the heat map for every time slot is arranged at the center portion of the screen, and the check box column of the user group called "XXUsers" is arranged on the left side of the screen. In the check box column of this user group, a check box is provided to every individual user in the user group, and those not fitting on the screen are displayed by lowering the check box column with the left-side slide bar of the check box column. If removing the check from the check box of each user provided in the check box column, the job execution rate of the remaining users excluding the removed users is recalculated, and the heat map is displayed for only the remaining users. The job execution rate is not necessarily calculated upon the check operation of check boxes, and may be an operation of switching the display to the job execution rate calculated at a predetermined timing. It is thereby possible to reduce the burden of calculation irrespective of the frequency of the checking operation on check boxes. It should be noted that, when clicking the user group name "XXUsers" at the heat map upper portion on this screen 55, it transitions to the screen of a list display of job execution rate and operating rate of all users in the group. It should be noted that the job execution rate of the user can also be expressed as operating rate.

The screen 56 shown in FIG. 10 is a screen of a list display of job execution rate and operating rate of all users in the group. On this screen 56, it is possible to more simply manage which user is executing how many jobs. In the example of this screen 56, it is found that the job execution rate (in one day) reaches 100% through each time slot of 0 hr to 23 hr by only one user in the fifth row from the left end.

From the viewpoint of the manager mu, since it can be easily grasped how much which user is using the job execution server 2, based on this information, it is possible to make a plan for all users who are members of the same group to use the job execution server 2 fairly.

According to the heat map job calendar display function by the master server 1, in this way, it is possible to acquire one or more jobs from each of the one or more executor terminals 3-1 to 3-m on the calculation executor eu side performing a calculation request for a predetermined job, conduct, in each of a plurality of predetermined time slots as job allocation, processing of defining at least part of the job execution servers 2-1 to 2-n as an allocation destination, and allocating the one or more jobs to the allocation destination, and execute control to cause the plurality of time slot regions (cells) indicating each of the plurality of predetermined time slots to be displayed by carrying the display mode (for example, heat map display) according to the contents of the job or the operating rate of every job execution server 2 or every user, and further for every group for group units or individual machine units including at least one of the plurality of job execution servers 2-1 to 2-n, or job units. Therefore, the convenience of schedule management of jobs in distributed processing can be improved. More specifically, by displaying the heat map on the information processing device (master server 1, manager terminal, etc.) operated by the manager mu, the manager mu can easily grasp the operating status of the job execution servers 2, execution status of jobs, etc. for every date and time, every day of the week, every hour, etc. In addition, by displaying the state of one or more desired job execution servers 2, the user such as the manager mu or calculator executor eu can visually more easily understand information of the operating status of the job execution servers 2, compared to a text display.

Next, a job calendar display function by the master server will be described by referencing FIGS. 11 to 18. FIG. 11 is a view showing an example of a screen of a job calendar provided by the master server of FIGS. 2 and 3. As shown in FIG. 11, in the screen 61 of the job calendar, the vertical axis is the time slot, and the horizontal axis is the date, and the job calendar of table formant in which cells are arranged at positions where these intersect each other is arranged at the center portion in the screen. In addition, a small-scale calendar is arranged at the upper left of the screen (upper left of job calendar) on this screen 61. Furthermore, a check box column is arranged on the left side (below small-scale calendar) of the job calendar on this screen 61.

Herein, if the operator click operates a desired date on the small-scale calendar at the upper left in the screen 61, data of the operating rate (contents of job in time slot and background color indicating the operating rate) for every time slot on this date is displayed on the large job calendar in a central portion. Buttons such as "<", ">", "<<" and ">>" are arranged on (upper portion of job calendar of) this screen 61. The "<" and ">" buttons are buttons transitioning the screen to each week. The "<<" and ">>" buttons are buttons transitioning the screen to each month.

In the check box column arranged on the left side (screen left side) of the job calendar, check boxes for designating the server group and check boxes for designating a user group are provided, and data of groups made by checking in the check boxes can be displayed on the job calendar. When the operator click operates a cell of a desired time slot on the job calendar, the screen transitions to the job submission screen 67 shown in FIG. 17. It should be noted that the job submission screen 67 will be described later.

According to the screen 61 of the job calendar, it is possible to exert the following effects. In other words, from the viewpoint of the calculation executor eu, it is possible to submit a job at any time. By sorting or filtering data of the operating rate by server group or user group, in the case of submitting one's own job, it is possible to predict how long the waiting time will be for which group. The color of the job differs for every user and every job execution server, and a job submitted by a different user and a job submitted by oneself can be easily distinguished from the different colors.

FIG. 12 is a view showing an example of a screen displaying a job calendar displayed in week units, among screens of the job calendar provided by the master server of FIGS. 2 and 3. As shown in FIG. 12, in the screen 62 of the job calendar, a column (vertical row of cells) of the date of the present day (day of the 5th in present example) is filled with a different color from a column of another date, e.g., with a cream. In addition, the current time is shown by a red solid line (horizontal line). The color on the calendar differs according to the status of the job. For example, the method of display differs between a case of the job ending properly, and a case of failing in execution. The case of a job having failed is displayed as "Failed", and the case of ending properly is displayed as "Finished". Otherwise, a job in execution is displayed as "Running". A job forcibly ended by Wall Time is displayed as "Time out" or the like. It should be noted that Wall Time is the maximum time for which a submitted job can be executed. For example, in the case of a job having a Wall Time of 24 hours, the job is ended at the point in time of 24 hours even in the case of the duration required in the job being 30 hours. The calculation executor eu can easily grasp the state of one's own job from such a color display. In addition, the manager mu also grasps the state of the job, whereby it becomes easier to isolate problems in job execution server operation.

Next, a display example of jobs in the job calendar function will be described by referencing FIGS. 13 and 14. FIG. 13 is a view showing an example of a job calendar aggregating jobs for every time slot among a screen of the job calendar provided by the master server of FIGS. 2 and 3. FIG. 14 is a view showing detailed information displayed by mouse overing the column of jobs displayed on the job calendar of FIG. 13. By displaying the detailed information by mouse over, as in the detailed display screen 64 by mouse over, it is possible to simply grasp the minimum information required on the job calendar, and it is possible to easily grasp detailed information which will not fit in the display area on the job calendar.

As shown in FIGS. 13 and 14, with the job calendar 63, a plurality of jobs may be submitted at the same time (time slot). (A case of not necessarily being exactly the same times, but times so close that cannot be separated on the display is described herein as case of a plurality of jobs being displayed at the same time.) In this case, the contents of a plurality of jobs in the same time slot are displayed collectively in one cell. At this time, how many jobs are collected is displayed by the grey button 63a arranged at a side portion of the date row in the job calendar 63. For example, when an operator such as the calculation executor eu click operates this button 63a, a list screen of job details shown near the center of FIG. 13 is displayed. By establishing the buttons 63a, it is possible to simply grasp the minimum required information on the job calendar, and it is possible to easily grasp detailed information which will not fit in the display area on the job calendar through a click operation. For example, in the case that a job ended by error, the information displayed on the list screen of job details becomes the calculated time period, status of the job and the name of the job. This list screen of job details can extend downwards by a scroll operation on the wheel of the mouse. From the display of the list screen of job details, the operator (for example, calculation executor eu), in the case of one's own job ending in a shorter time than expected, can confirm whether this is an error or ended properly. In the example of screen 64, as one job, the job execution server 2 "113.1ab-fnd-alhp003" is displayed as ended "FINISHED" with a circle mark with a check, whereby it is understood that the job ended properly. It should be noted that, in this example, although the button 63a for displaying a list screen of job details is provided, additionally, it may be configured so that information such as the job name is displayed by moving the cursor to the position of the desired time slot with the mouse, for example, i.e. by mouse over. By this display method, the calculation executor eu can confirm the minimum required information by a separate window, without performing a screen switching operation by a button operation or the like.

For example, even in the case of the number of user groups or server groups increasing, and visibility of jobs in time slots being poor upon displaying the job calendar 63 of FIG. 13, the calculation executor eu can confirm the detailed contents of the execution status of a job submitted in the time slot (time) wanted to confirm, by causing the list screen of job details to be displayed as described above.

Changes in the display units will be described by referencing FIG. 15. FIG. 15 is a view showing information displayed on the screen of the job calendar provided by the master server of FIGS. 2 and 3, by checking check boxes arranged in the job calendar. As shown in FIG. 15, a job calendar 65a is arranged on the entire screen in screen 65, and a check box column 65b is arranged on a left side portion of the job calendar 65a.

In the check box column 65b, check boxes for each user group and server group are arranged. The check boxes are operation buttons for changing the display units of the user group or server group. By inserting or removing a check in each of the check boxes of the user groups and server groups in the check box column 65b on this screen 65, it is possible to display on the job calendar 65a only information (required information) of the groups with a check.

In this screen 65, a different color is given to each of the users and each of the servers, and the operator can visually confirm in a glance by which user the job information displayed on the job calendar 65a was submitted, and what the status is of the server. In addition, with this screen 65, it is possible to confirm how each job is operating on which server for every day, and the status thereof.

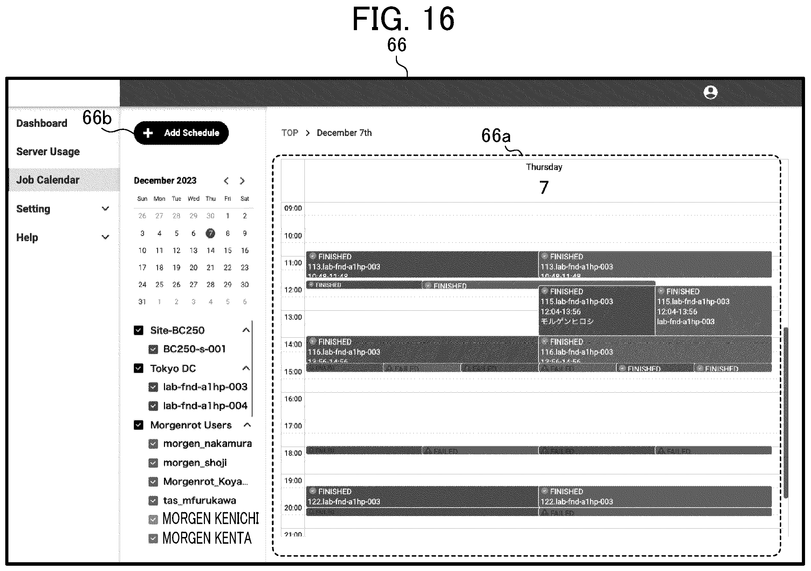

Another example of changes to the display units will be described by referencing FIGS. 16 to 18. FIG. 16 is a view showing a screen of the job calendar changed from the job calendar of week units of FIG. 15 to a job calendar of day units. FIG. 17 is a view showing a job submission screen that is pop-up displayed on the calendar of FIG. 16. FIG. 18 is a view showing a new job registration screen displayed by a new job registration operation on the job submission screen of FIG. 17.

As shown in FIG. 16, a job calendar 66a of one day (for example, December 7, 2023 (Thursday)) is shown on the screen 66. A plurality of jobs related to a plurality of server groups (i.e. plurality of job execution servers 2) are submitted on the job calendar 66a. In addition, these jobs are displayed with each of the calculation executors eu.

By clicking the date portion of the job calendar 65a, the screen transitions from the display of week units to a display of day units (job calendar 66a), from the screen 65 to the screen 66. Although the size of the vertical width is the execution time of the job as a general rule, a width such that the font can deciphered is retained for instant jobs. When a plurality of job execution servers 2 or calculation executors eu (users) are selected, the jobs displayed horizontally are added. It is sufficient if click operating any date by the calendar of a month on the left side to cause the screen to transition to another date, while keeping the display of this screen 66. In the display mode of this screen 66, the job submission screen 67 (refer to FIG. 17) is pop-up displayed, by clicking an empty space at any time in the job calendar 66a, or click operating an "Add Schedule" button 66b on the screen upper left portion.

On the job submission screen 67 shown in FIG. 17, it is possible to designate a separate date and time, designate the job execution server 2, or the like. A case of executing a job on this job submission screen 67 requires registering the job in advance with a job registration screen. By this mechanism, the calculation executor eu can separately conduct more detailed settings and submission of the job, and can confirm only the required information on one screen. If click operating a "New Job" button 67a arranged at the upper right portion of the popped-up job submission screen 67, the job registration screen (refer to FIG. 18) for registering new jobs is displayed.

In the job registration screen 68 shown in FIG. 18, an input column is arranged for inputting each piece of information such as the name of the job, predicted time required in job execution (this is called "estimated processing time"), and execution files of jobs. On the job registration screen 68, the name of a job to be submitted, execution files, or estimated processing time are inputted to each of the input columns. Any name can be inputted as the name of the job. An accurate execution time of a job is unclear until actually ending the execution of the job; however, by inputting the estimated processing time before job execution, it is possible to describe the schedule of a job on the calendar. Other users can thereby simply grasp how long a waiting time arises according to jobs already scheduled. Herein, the estimated processing time may be obtained by another method such as calculating from the results of similar jobs. Upon the estimated processing time being displayed on the calendar, in the case of the execution time being shorter than the estimated processing time, it is possible to correct the display of the estimated processing time, and display as the precise execution time at the timing at which execution ends. For example, in the case of a job having an estimated processing time of 120 minutes completing in an execution time of 100 minutes, the estimated processing time is displayed at 120 minutes until the moment 100 minutes elapse from the job execution start, and after 100 minutes elapse, the display of this job can be switched to 100 minutes, which is the precise execution time. In the case of the execution time being longer than the estimated processing time, the display of the estimated processing time is displayed by lengthening until ending execution, and it is possible to display as the precise execution time at the timing at which the execution ends. For example, in the case of a job having an estimated processing time of 120 minutes not completing even at the moment of an execution time of 125 minutes, it is possible to display the finish time of the estimated processing time of this job as the current time until the job finishes. In the case of finishing at the moment of an execution time of 140 minutes, it is possible to confirm as an execution time of 140 minutes at this moment, and display this job. At this time, the update frequency of the display may be a decided time unit such as every 5 minutes, and a screen update operation may be accepted from the user or the like to update to the latest information at this moment. Such switching of the display of estimated processing times can be always corrected based on the latest information obtained midway such as logs of the job and, for example, in the previous example, in the case of the progress being 50% at the moment of 50 minutes elapsing since job execution start, the display of the job having an initial estimated processing time of 120 minutes can be updated and displayed as an estimated processing time of 100 minutes at this moment. It is thereby possible to grasp more accurate information. In addition, the actual executable time of the job can be managed by a separate method as Wall Time. A job having reached the Wall Time can be made to forcibly end. By being able to set the estimated processing time and Wall Time separately, it is possible to use the estimated processing time in order to grasp the future availability of servers, and use the Wall Time in strict time management of servers. In addition, by having the user input, as the same value, the estimated processing time and Wall Time, which can be set separately, it is possible to grasp the future availability of servers with strict time management. The manager mu can set various conditions for fair use of the job execution servers 2. A job having high importance can be set with high priority and long Wall Time. In addition, for a job not having high importance, the jobs of many users can be executed by setting a short Wall Time.

It should be noted that the job registration screen 68 shown herein is an example, and it may be configured to input other information. For example, it may be configured so as to establish as input items the processing conditions such as the contents of a job, job start or finish date and time, estimated processing time, job execution server 2 and parallel number thereof to execute the job, and accept the information inputted into these input items. In addition, it is not necessarily required to accept all of the items given earlier. For example, the job execution server(s) 2 and parallel number thereof to execute a job can be determined such that it is possible to execute, based on the availability of job execution servers 2 at the moment of job registration, by allocating and parallelizing one node among any job execution servers 2 in an available state. In particular, by preparing past job registration history, job registration information designated by the manager, a separate algorithm (optimization algorithm of distributed processing, etc.) and the like, and accepting this information and supplementing a part or the entirety of information required in job registration, it is possible to schedule or immediately execute a job. The contents used in job registration such as the contents of the job can be saved, and information can be called when executing a similar job again.

According to the job calendar display function by the master server 1 in this way, by color-coded displaying contents of jobs submitted by the calculation executor eu and allocated to any job execution server 2 on a job calendar as shown in FIG. 11 in the master server 1, the operator can understand at a glance who submitted what job to which server and when, and how execution results of the job are obtained. In addition, even if a job of identical contents on the job calendar, since the display color of the row or cell of a date is varied (changing expression mode) on the job calendar as in FIG. 11, for example, according to the status such as the ID and group of the calculation executor eu submitting a job, and date, it is possible to recognize at a glance the differences in each job. Furthermore, in the case of a plurality of jobs being allocated in the same time slot on the job calendar as in FIG. 13, since the time region thereof is displayed in an expression mode indicating this point, and the plurality of job contents are displayed in separate regions according to a predetermined instruction, it is possible to easily confirm the job contents, execution results, etc. If making a predetermined operation (for example, mouse over) for selecting a predetermined time region in the job calendar, since information related to the job contents are displayed in a separate region as in FIG. 14, the operator does not have to make an operation of opening and closing every single separate screen, and thus operability can be improved. By inputting and removing checks in the check boxes provided at a side portion of the job calendar as in FIG. 15, it is possible to easily change the units displayed on the job calendar to user group units or server group units, individual user units, individual server units or the like. In addition, by setting (number set to 7 if one week, and number set to 1 if one day) the number of columns (for example, vertical band-shaped bundle of one day) of the plurality of time slot regions, the screen size does not change as in FIG. 16, and if changed from one-week display to one-day display, since the size of the time-slot region increases, it is possible to display to include various information in the time slot regions. Similarly, although not illustrated, by displaying the vertical axis as date (day of the week) and the horizontal axis as time slot (time), it is possible to grasp information in detail in the time slot on the display of a screen having longer width than height. When selecting a future predetermined time-slot region (cell) on the job calendar, the job submission screen 67 of FIG. 17 is displayed, for example, as a separate region having a function of scheduling a job in this time-slot region, and an execution scheduling screen of a future job, i.e. the job registration screen 68 of FIG. 18, is displayed by operation of the "New Job" button 67a; therefore, the operator can easily make a job submission schedule.

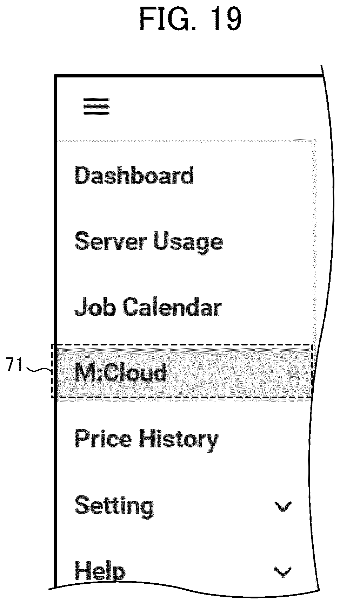

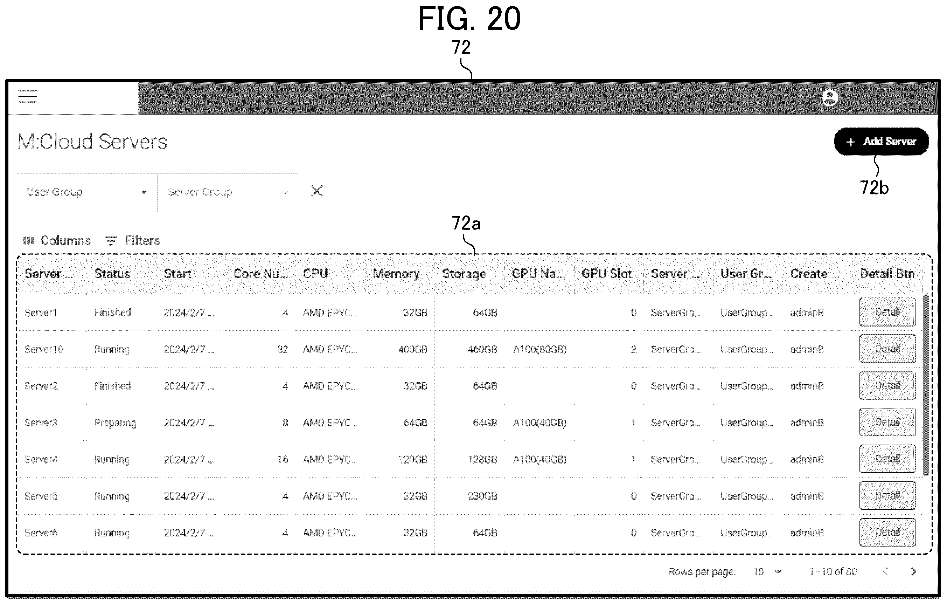

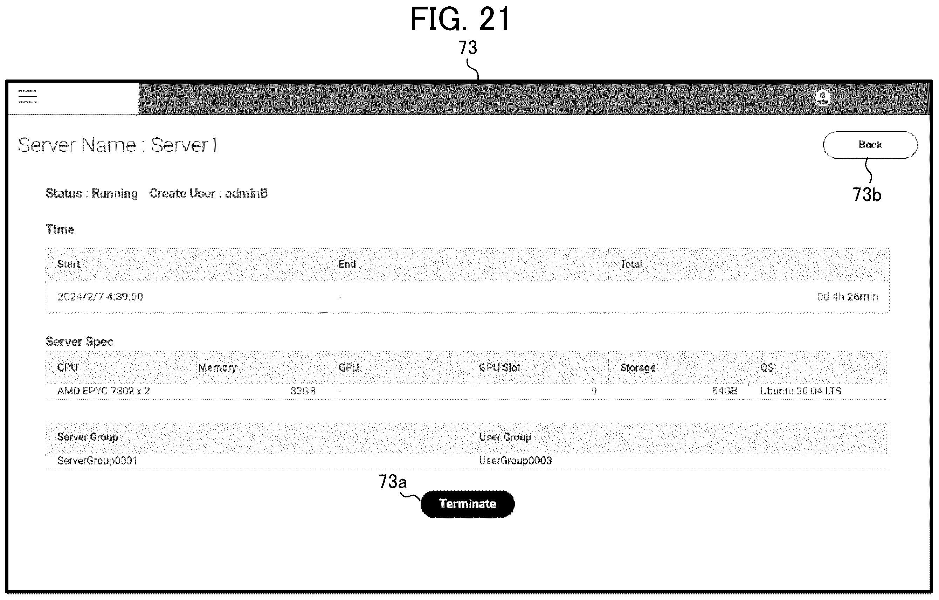

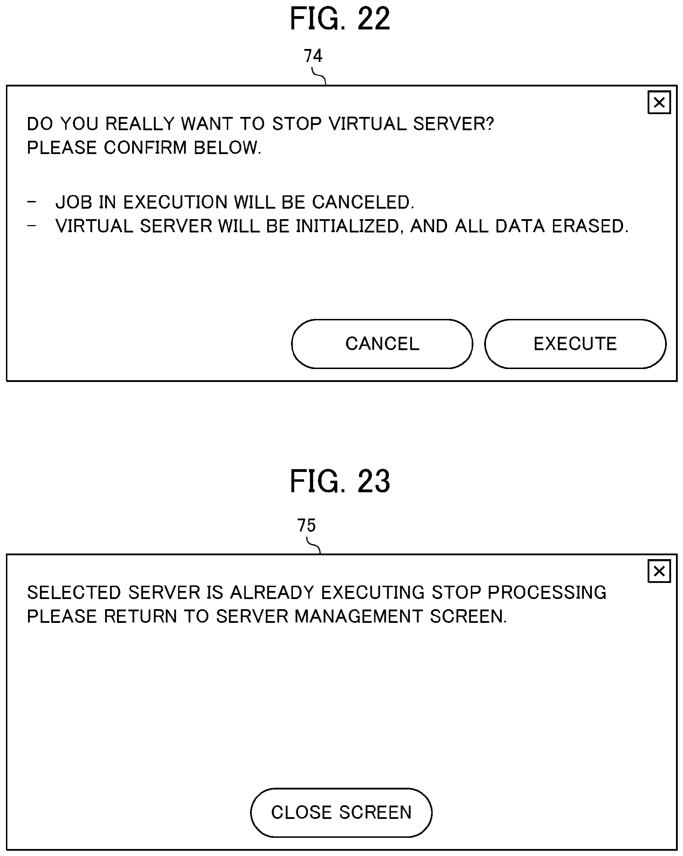

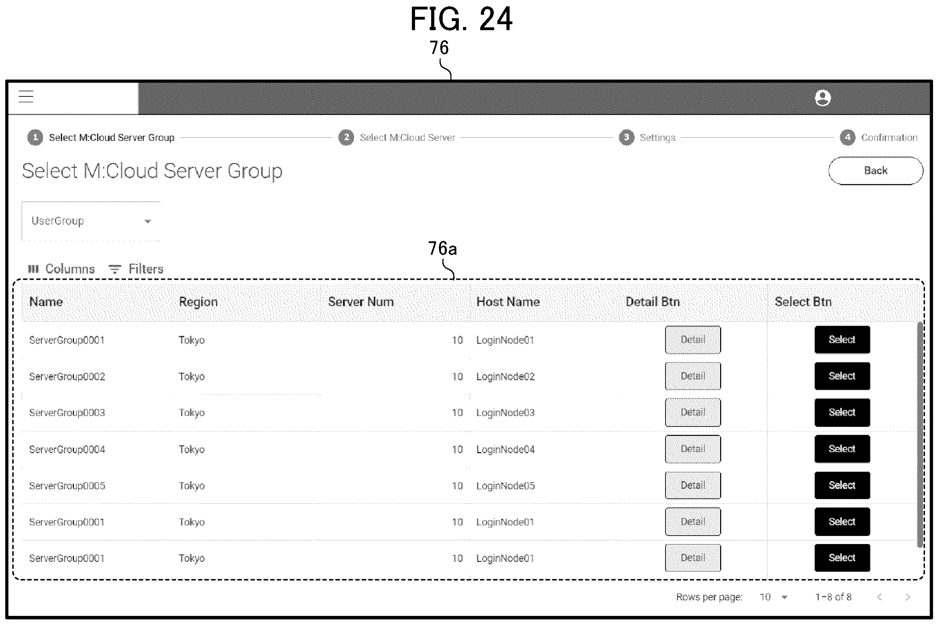

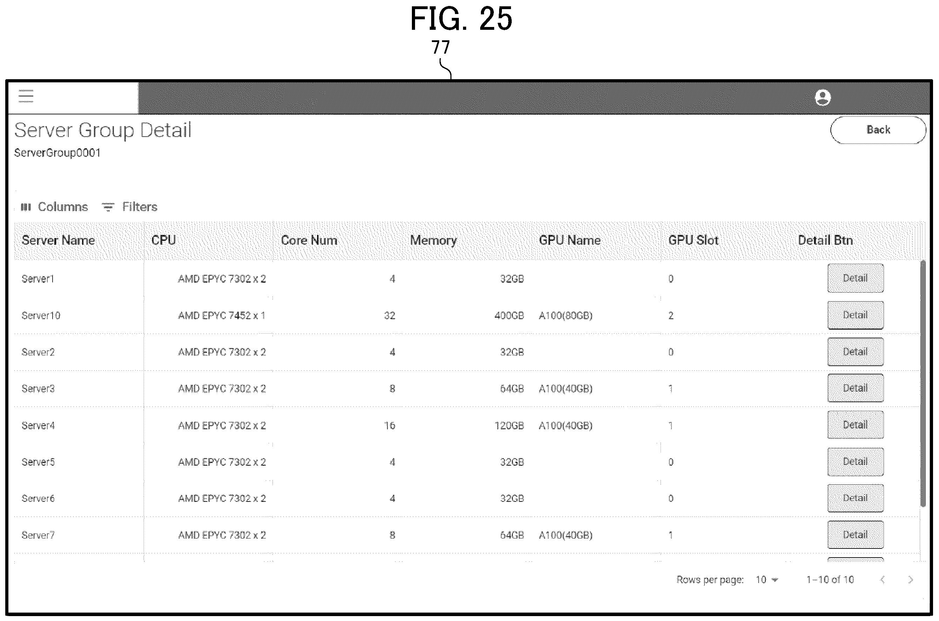

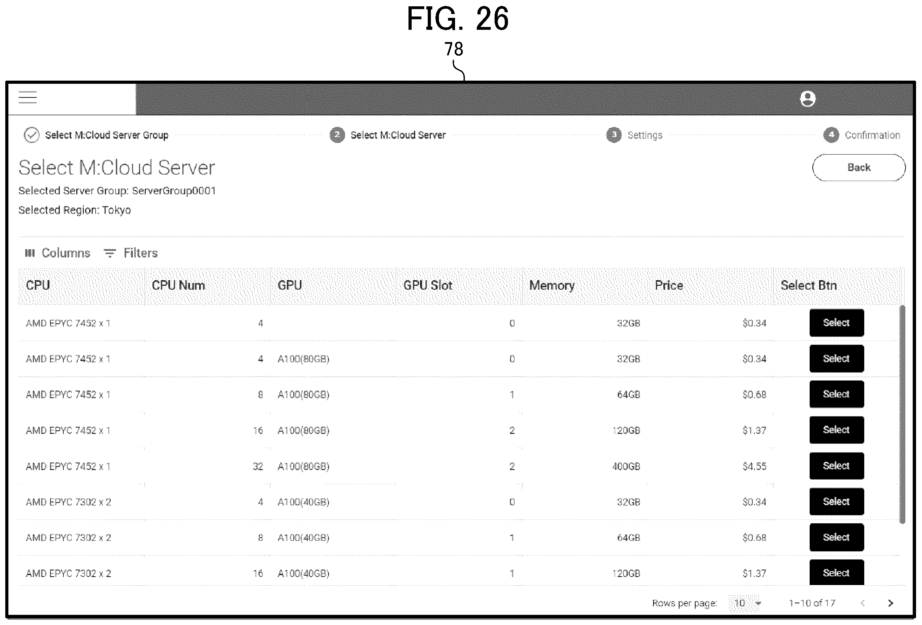

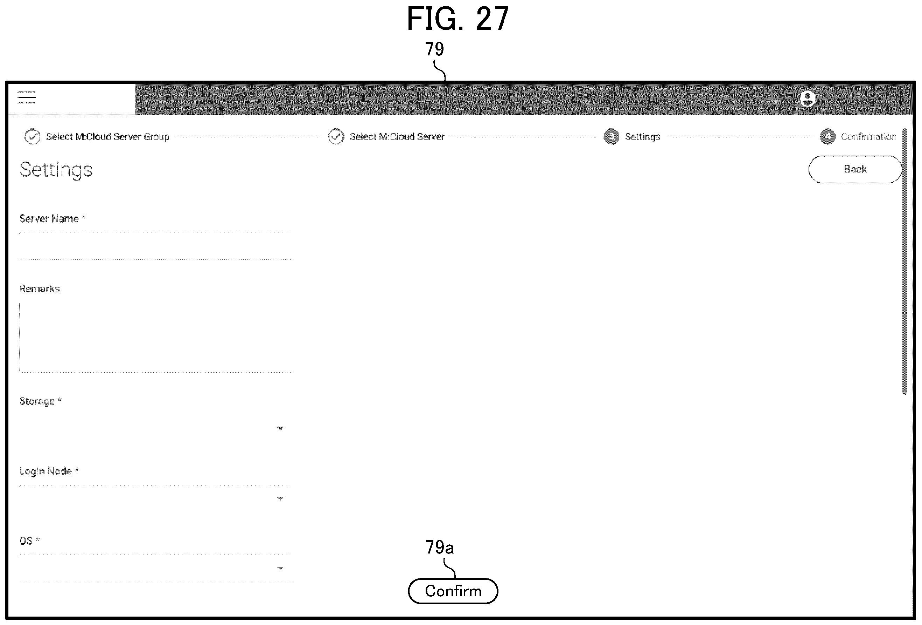

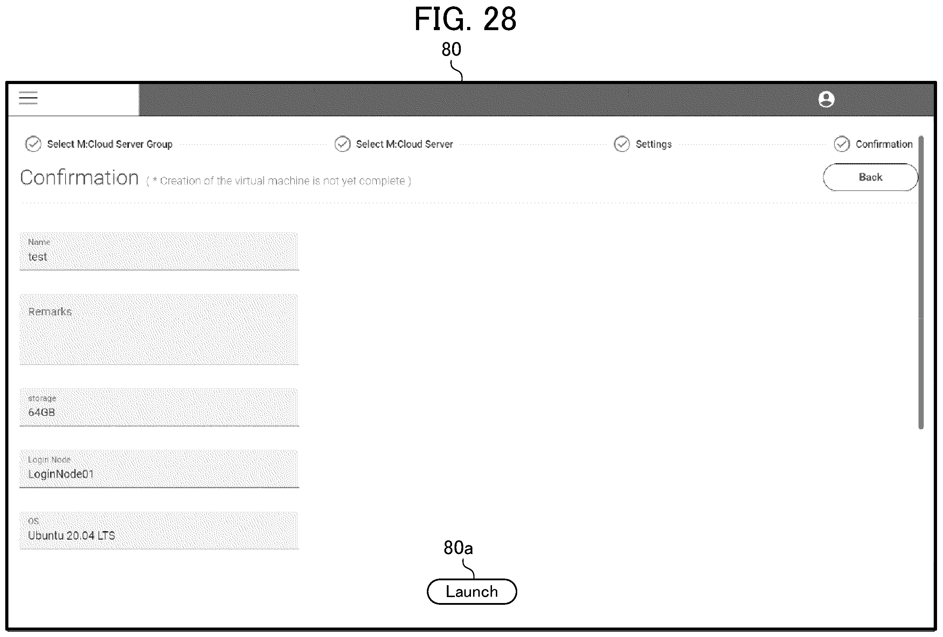

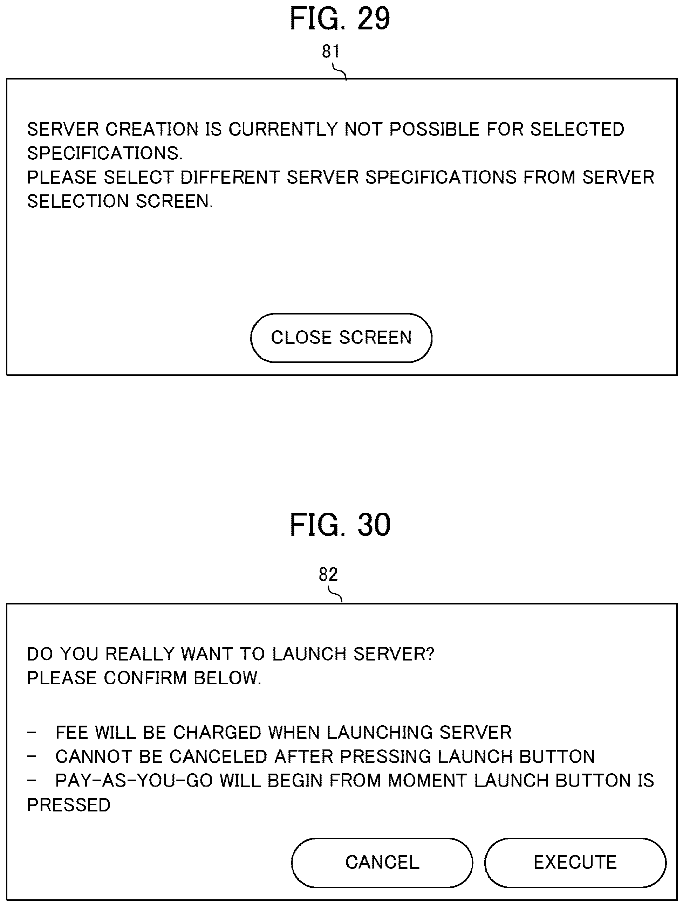

Next, the cloud cooperation function of the master server will be described by referencing FIGS. 19 to 30. FIG. 19 is a view showing menu items of functions provided by the master server of FIGS. 2 and 3. FIG. 20 is a view showing a server management screen of currently contracted cloud servers, displayed by operating the item of the cloud cooperation function ("M: Cloud" button) among the menu items in FIG. 19. FIG. 21 is a view showing a detail screen of the cloud server selected on the server management screen of FIG. 20. FIG. 22 is a view showing a server stop pop-up screen displayed by a stop operation on the detail screen of FIG. 21. FIG. 23 is a view showing an error pop-up screen during server stop displayed by the stop operation on the detail screen of FIG. 21. FIG. 24 is a view showing a server group selection screen displayed by operating an "Add Server" button which makes an addition of a new cloud server on the server management screen of FIG. 20. FIG. 25 is a view showing a server group detail screen displaying detailed information of the server group selected on the server group selection screen of FIG. 24. FIG. 26 is a view showing a selection screen of an additional server selected on the server group detail screen of FIG. 25. FIG. 27 is a view showing an addition setting screen of the additional server selected on the selection screen of the additional server of FIG. 26. FIG. 28 is a view showing an addition confirmation screen of the additional server set on the addition setting screen of FIG. 27. FIG. 29 is a view showing an error pop-up screen displayed when there is a deficiency in conditions on the addition confirmation screen of FIG. 28. FIG. 30 is a view showing a final confirmation pop-up screen displayed upon activating the server conforming to the conditions on the addition confirmation screen of FIG. 28.

Generally, the server environment has the two form of on-premise (called a customer-owned server (hereinafter "on-premise server")) and external cloud server use (hereinafter called "cloud server"). It should be noted that, herein, the servers are established in two forms; however, it may be the three forms of on-premise, cloud and machine provided from a third party, as illustrated in FIG. 1. Therefore, a case where the machine provided from a third party is usable similarly to the cloud will be described hereinafter. In the present embodiment, for example, if the machine provided from a third party is physically loaned, the usage method is the same as on-premise, and if the machine provided from a third part is loaned by provision of a communication means or method, the usage method thereof can be use similar to the cloud.

The master server 1 of the distributed processing system according to the embodiment includes a cloud cooperation function, and can manage servers having different installation locations and management methods such as the on-premise server and cloud server, in cooperation on the same browser via a network. The cloud server provides a server machine mainly by a service provider in a pay-as-you-go system. The user and manager select the required specifications, and activate the cloud server. The usage fee of the cloud server is determined according to the usage time, and a corresponding amount is charged.

Hereinafter, the cloud cooperation function of the master server 1 will be described. On the aforementioned top screen 51 (refer to FIG. 5) and screen 61 (FIG. 11), the "M: Cloud" button 71 for adding the cloud server is arranged among the menu items on the left side of the screen, as shown in FIG. 19.

When the operator click operates the "M: Cloud" button 71 (item) arranged in the menu item of FIG. 19, the server management screen 72 shown in FIG. 20 is displayed. In the server management screen 72, an information column 72a of cloud servers currently contracted is arranged, and an "Add Server" button 72b is arranged at the upper right portion of the screen. By click operating the "Add Server" button 72b, it is possible to newly add a cloud server.

In the information column 72a of currently contracted cloud servers on the server management screen 72, the cloud server name and operating status (Status), or machine specification (CPU, Memory, Storage), usage information (User Group, ...), "Detail" button, etc. are displayed, whereby it is possible to confirm the information of each cloud server. It should be noted that, on this server management screen 72, a cloud server with the Status defined as "Finished" in the default state is not displayed in the information column 72a, only the cloud servers active at the display moment are displayed in the information column 72a, and subsequently, the Status is defined as "Finished" at the moment when the job execution finished; therefore, it is possible to confirm the change in status of operating cloud servers. The information of each item in the information column 72a can be filtered, and the information required by the user and manager can be extracted. According to the server management screen 72, it is easy to notice a cloud server that is still active although the use scheduled time period has elapsed, and the user himself/herself can conduct immediate termination processing, or the manager can prompt termination processing to the user.

Herein, when the operator presses the "Detail" button of the line of a desired cloud server in the information column 72a on the screen, the detail screen 73 of this cloud server is displayed, as shown in FIG. 21. It is possible to confirm the specifications, operating period, usage fee, etc. of the contracted cloud servers from the detail screen 73. By the operator pressing the "Terminate" button 73a arranged at the lower portion of the screen in this detail screen 73, the operation state of the target cloud server (operating state or stopped) is determined from the flag of the operation state of the job execution server 2 saved in the job management DB 42, and the pop-up screen (refer to FIGS. 22 and 23) is displayed according to the determined operation state; therefore, it is possible to stop the target cloud server by making an operation according to the message on the displayed pop-up screen. More specifically, if the operation state of the target cloud server is the operating state, the pop-up screen 74 of FIG. 22 is displayed, and if the target cloud server already stopped, the pop-up screen 75 of FIG. 23 is displayed. It should be noted that, by the "Back" button 73b arranged at the upper right portion of the detail screen 73 being pressed by the operator, the screen transitions (returns) to the server management screen 72 of FIG. 20.

If the operation state of the target cloud server is the operating state, the pop-up screen 74 of FIG. 22 is displayed. This pop-up screen 74 is a pop-up screen for prompting the operator to confirm server stop, and becomes a warning screen for final confirmation upon the operator stopping use of the cloud server. Herein, when the operator presses an "execute" button arranged on the pop-up screen 74, the server stop processing is executed. It should be noted that, when the operator presses the "cancel" button, the pop-up screen 74 is erased, and the display of the screen is returned to the one previous detail screen 73 of FIG. 21. By causing the operator to perform an execution operation for stop processing after prompting the operator for confirmation by the pop-up screen 74 in this way, it is possible to reduce the risk of unintentionally stopping a cloud server.

In addition, as a result of determination of the operation state of a target cloud server, in the case of the target cloud server having already stopped, the pop-up screen 75 of FIG. 23 is displayed. This pop-up screen 75 is a pop-up screen for stop error notification of notifying the operator about stop processing already being performed on the target server. The operator having confirmed the pop-up screen 75 presses the "close screen" button arranged on the pop-up screen 75, the pop-up screen 75 is erased, and the display of the screen is returned to one previous detail screen 73 of FIG. 21. The operator can thereby confirm that the target cloud server has already undergone stop processing.

If the "Add Server" button 72a is pressed on the server management screen 72 shown in FIG. 20, the screen 76 shown in FIG. 24 is displayed. This screen 76 is a screen for selecting a server group at the time of new server addition, and the information column 76a of the server group is displayed. Since the server group is associated with the user group or user, only the server groups selectable by a logged-in user are displayed in the information column 76a. For example, by configuring so that the calculation executor can display and select server groups which can be used by himself/herself, and the manager can display and select all server groups, it is possible to facilitate permissions management for every department in an organization such as a company introducing the present system. It should be noted that, for example, by the operator selectively operating a name portion of any server group in the information column 76a, the screen of a heat map or job calendar related to the target server group may be displayed (refer to FIG. 5 or FIG. 11). It is thereby possible to add a new server, while confirming the latest server status, and thus setting of the desired server specification or operating time becomes easy.

By the operator pressing the "Detail" button of the desired server group among "Detail" buttons arranged in the information line of each of the server groups in the information column 76a, the detail information of this server group is displayed on the server group detail screen 77 (refer to FIG. 25).

On the server group detail screen 77 shown in FIG. 25, a list of cloud servers registered as this server group is displayed. Furthermore, in the list of cloud servers, detail information such as the installed number of CPU/GPU of each cloud server, slot number, etc. is displayed. By pressing the "Detail" button arranged in the information line of each of the cloud servers of the server group detail screen 77, the screen transitions to the detail screen 73 of a singular cloud server of the aforementioned FIG. 21.

On this server group detail screen 77, usable servers including third-party servers and cloud servers are listed. By registering a server owned by oneself having low operating rate in this system, it is possible to allow a third party to use the server and improve the operating rate. In addition, by presenting to the operator the price of an already contracted cloud server on the server group detail screen 77, and the operating rate of this server on the calendar screen, a psychological deterrent effect can also be expected such that prevents new contracts from competing with one another. By displaying the usage status of every cloud server on the server group detail screen 77, the operator can also grasp the specifications that are in demand.

On the above-mentioned screen 76 of FIG. 24, by the operator pressing the "Select" button of a desired server group among "Select" buttons arranged in the information line of each of the server groups, the selection screen 78 (refer to FIG. 26) of the additional server to this server group indicating the next sequence is displayed.

On the selection screen 78 shown in FIG. 26, the operator can select the cloud server demanded himself/herself. As selection items, for example, there are basic elements such as the CPU model number, equipped number thereof, core number, memory size, GPU model number, equipped number thereof, and OS classification, and it is possible to select the desired elements to select a cloud server.

According to the selection screen 78, the operator can perform filtering for each of the above-mentioned elements when selecting a cloud server. Thereby, when there are more types of selectable cloud servers, searching for and selecting an objective cloud server becomes easier. In addition, on the selection screen 78, detailed designations such as CPU and GPU model number, memory size and OS can be made; therefore, the operator can easily select a cloud server suited to the calculation contents trying to be executed by oneself.

On the selection screen 78, if the operator presses the "Select" button arranged in the information line of the cloud server hoped to use, the server setting screen 79 (refer to FIG. 27) indicating the next sequence is displayed. On the server setting screen 79 shown in FIG. 27, it is possible to perform an additional setting for portions other than the settings of basic elements of the selected cloud server. More specifically, on the server setting screen 79, for example, the input column such as Server Name, Remarks, Storage, Login Node and OS are arranged, and the operator can perform setting of whether or not using storage and the storage volume, host name, Login Node for access, etc. In the input column of Remarks, it is possible to register notes such as the intended use by any text input. After the storage volume confirmation, the usage fee per hour is displayed at the lower portion of the screen. The usage fee is not necessarily per hour, and by having users input the time for which a quote is wanted, it is possible to display the usage fee according to this time. The information inputted on this server setting screen 79 is inputted into a quotation template of a predetermined format by operation of a quote creation button (not illustrated), and can be downloaded as a quotation file. By such a quotation generation function, since it is possible to confirm the cost before contracting, in the case of exceeding the budget, it is possible to adjust the conditions of a target contracted cloud server such as slightly lowering the specifications.

By the operator pressing the "Confirm" button 79a arranged at the lower portion of the server setting screen 79 of FIG. 27, after inputting information to the above-mentioned input column, the server confirmation screen 80 (refer to FIG. 28) is displayed. The conditions of the cloud server in which the contents inputted on the above-mentioned server setting screen 79 are reflected are presented on the server confirmation screen 80 shown in FIG. 28. By the operator viewing and confirming the contents of the server confirmation screen 80, a final confirmation is performed before starting use, and by the operator pressing the "Back" button arranged at the upper right portion of the server confirmation screen 80 upon there being a deficiency in the condition settings, it is possible to return to the prior server setting screen 79, and correct the conditions.

As a result of making final confirmation of the contents of the server confirmation screen 80, in the case of the setting conditions of the cloud server being correct, by the operator pressing the "Launch" button 80a arranged at the lower portion of the server confirmation screen 80, the conformity between the setting conditions of the cloud server and information of the cloud servers saved in the job management DB 42, the presence/absence of a corresponding cloud server in inventory, etc. are checked, it is determined whether a cloud server can be contracted, and a pop-up screen (refer to FIGS. 29 and 30) is displayed according to the determination result; therefore, it is possible to create (contract) a new cloud server by making an operation according to the message of the displayed pop-up screen.

As a result of determination, in the case of the conditions being inconsistent and creation (contracting) of a cloud server not being possible, e.g., case of not being able to create (prepare) a cloud server with the cloud server specifications for which the conditions are set, the pop-up screen 81 (refer to FIG. 29) is displayed. It should be noted that in the case of being no inventory of machines of the specification set by the operator, or already being in use, this pop-up screen 81 is also displayed. In the pop-up screen 81 shown in FIG. 29, a message such as "Currently a server with the selected specifications cannot be created. Please select other server specifications from the server selection screen.", and a "close screen" button are displayed. When the operator confirms this message, and presses the "close screen" button, it returns to the server confirmation screen 80 of one prior in FIG. 28 to select other specifications of the cloud server.

In addition, as a result of determination, in the case of conditions being consistent, and there being inventory and a cloud server can be created (prepared), the pop-up screen 82 (refer to FIG. 30) is displayed. The pop-up screen 82 is a screen for prompting the operator for final confirmation upon activating the cloud server. On the pop-up screen 82 shown in FIG. 30, a message such as "Are you sure you would like to activate server? Please confirm below...." and an "execute" button for activation of the server, and a "cancel" button are displayed. When the operator confirms the message of the pop-up screen 82 and presses the "execute" button, the master server 1 starts pay-as-you-go together with launching the target cloud server. It should be noted that, by pressing the "cancel" button on the pop-up screen 82, it is possible to cancel the processing related to the addition of this cloud server.

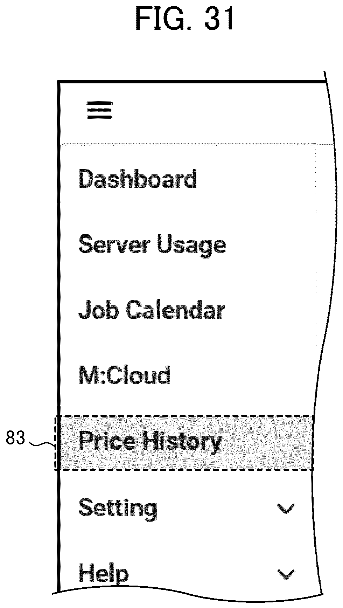

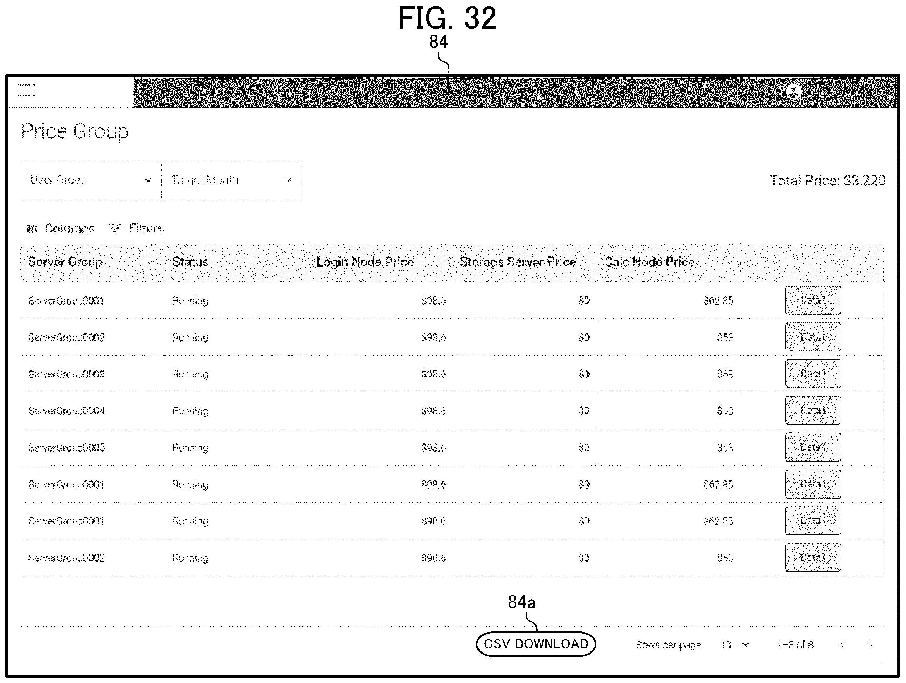

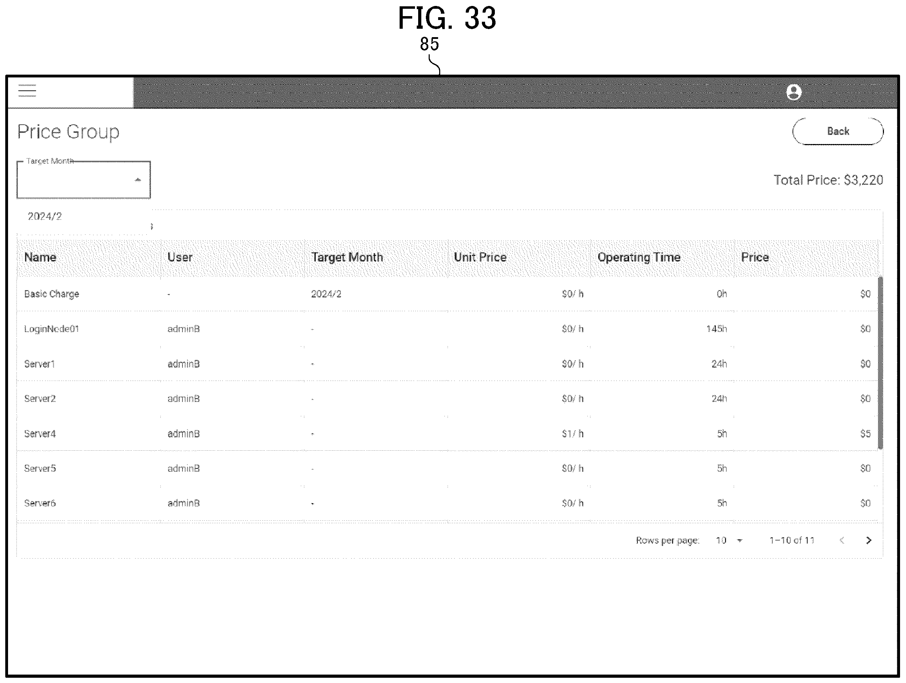

Next, a fee management function of cloud cooperation will be described by referencing FIGS. 31 to 33. FIG. 31 is a view showing a "Price History" button of the item of fee management function, among menu items of functions provided by the master server of FIGS. 2 and 3. FIG. 32 is a view showing a fee group selection screen displayed upon the "Price History" button of FIG. 31 being click operated. FIG. 33 is a view showing a detail screen on which detail information of the server group selected on the fee group selection screen of FIG. 32 is displayed.

On the aforementioned top screen 51 (refer to FIG. 5) and screen 61 (refer to FIG. 11), the "Price History" button 83 (function selection button) for confirming (managing) the usage fee of the server is arranged among the menu items on the left side of the screen, as shown in FIG. 31.

If the operator click operates the "Price history" button 83 arranged in the menu items of FIG. 31, the fee group selection screen 84 shown in FIG. 32 is displayed. On the fee group selection screen 84, a cloud usage fee in server group units is list displayed. At the upper right portion of the fee group selection screen 84, the total amount of all groups is displayed. In this example, "Total Price: $3220" is displayed. The display contents can switch the display month in month units. In addition, filtering by user group is possible. The display contents are not necessarily month units, and by the user inputting the time period desired to be displayed, it is possible to display the usage fee according to this time period. On this fee group selection screen 84, only information of a server group linked to this user group is displayed as a list. By the operator pressing the "CSV download" button 84a arranged at the lower right of the fee group selection screen 84, it is possible to download this list. From the fee group selection screen 84, in addition to downloading the list in CSV format, it is also possible to perform invoice downloads, credit card payment processing, etc.

In addition, among the "Detail" buttons arranged in the information column (row) of each group in the fee group selection screen 84, by the operator pressing the "Detail" button of a desired group, the fee group detail screen 85 (refer to FIG. 33) is displayed. On the fee group detail screen 85 shown in FIG. 33, a list of cloud servers contracted as a server group designated as the desired group is displayed. As the list of cloud servers, the Name of each cloud server (name), User (invoker name), Target month (target month), Unit Price (unit cost), Operating Time (active time), and Price (invoice amount) are shown. In the fee group detail screen 85, it is possible to confirm the usage status of individual cloud servers on a designated target month, for all cloud servers in the server group designated as the desired group on the fee group selection screen 84 of FIG. 32. More specifically, the operator (for example, manager of cloud server) can confirm the contracted cloud server list, invoker of each cloud server, unit cost, active time, invoice amount, etc., by viewing the contents of the fee group detail screen 85. Thereby, the manager of the cloud server can perform all at once from fee management to invoice issuance on the fee group detail screen 85, and thus the operational load of accounting processing can be reduced.

Although an embodiment of the present invention has been described above, the present invention is not to be limited to the aforementioned embodiment, and modifications, improvements, etc. in a scope which can achieve the object of the present invention are included in the present invention.

In addition, for example, the series of processes described above can be executed by hardware or software. In other words, the functional configuration of FIG. 3 is merely an exemplification, and is not to be particularly limited thereto. That is, it suffices if the information processing device is provided with a function capable of executing the above-described series of processing as a whole, and what kind of functional blocks are used to realize this function are not particularly limited to the example of FIG. 3. The locations of the functional blocks and the databases are not particularly limited to those in FIG. 3, and may be arbitrary. For example, at least part of the functional blocks and databases required in execution of various processing may be located in a user terminal or the like. Conversely, the functional blocks and databases of the user terminal may be in a server or the like. In addition, one functional block may be configured by hardware alone, may be configured by software alone, or may be configured by a combination thereof.

When a series of processes is executed by software, a program constituting the software is installed in a computer or the like from a network or a recording medium. The computer may be a computer built into dedicated hardware. In addition, the computer may be a computer capable of executing various functions by installing various programs, for example, in addition to a server, either a general-purpose smart phone or personal computer.

The recording medium containing such programs is not only a removable medium (not shown) distributed separately from the device main body in order to provide the program to the user or the like, but also a recording medium or the like provided to the user or the like in a state of being incorporated in the device main body in advance.

It should be noted that, in the present specification, the steps describing the program recorded in the recording medium include not only the processing performed in time series following this order, but also the processing performed in parallel or individually without necessarily being processed in time series. In addition, in this specification, the term "system" indicates an overall device including a plurality of devices, a plurality of means, and the like.

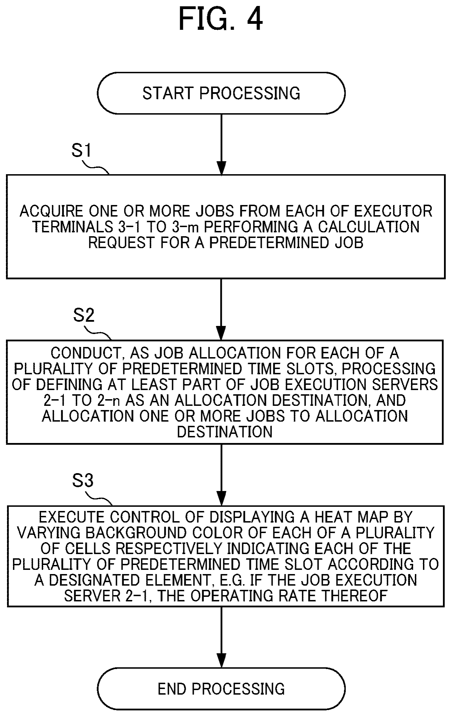

To restate the above, the information processing device to which the present invention is applied can assume various types of modes of implementation, so long as having the following such configuration.
(1) More specifically, an information processing device to which the present invention is applied (for example, the master server 1 of FIG. 3) includes:
   a job acquisition means (for example, the job acquisition unit 21 of FIG. 3) for acquiring, from each of one or more client devices (for example, the executor terminals 3-1 to 3-m) on a client side performing a calculation request for a predetermined job, one or more of the job;
   a job allocation means (for example, the job allocation unit 22 of FIG. 3) for conducting, as job allocation in each of a plurality of predetermined time slots, processing of defining at least part of a plurality of calculation execution devices (for example, the job execution servers 2-1 to 2-n) as an allocation destination, and allocating the one or more of the job to the allocation destination; and
   a first display control means (for example, the time-slot display controller 25 of FIG. 3) for executing control of variably displaying (for example, heat map display, etc.) a display mode of a plurality of time slot regions indicating each of the plurality of the predetermined time slots, according to a predetermined element (for example, operating rate of job execution server 2 or contents of job) for which a content or extent is variable according to time slot, for a predetermined unit (for example, group units, individual device units, job units) including one or more of the plurality of calculation execution devices (for example, the job execution servers 2-1 to 2-n). The user can thereby visually understand at a glance the time slots having high or low operating rate of job execution servers on the job calendar, thereby improving the convenience of job schedule management in distributed processing.
(2) The above-mentioned information processing device (for example, the master server 1 of FIG. 3) further includes:
   an operating rate calculation means (for example, the operating rate calculation unit 26 of FIG. 3) for calculating,
   in each of the plurality of predetermined time slots, an operating rate for the predetermined unit in accordance with the job allocation,
   in which the first display control means (for example, the time-slot display controller 25 of FIG. 3) executes the control by adopting the operating rate as the predetermined element. It is thereby possible to perform heat map display according to the operating rate of job execution servers 2.
(3) In the above-mentioned information processing device (for example, the master server 1 of FIG. 3),
   the first display control means (for example, the time-slot display controller 25 of FIG. 3) executes the control by adopting contents of the job allocated to the predetermined unit as the predetermined element. It is thereby possible to perform heat map display according to the contents of jobs allocated to job execution servers 2.
(4) The above-mentioned information processing device (for example, the master server 1 of FIG. 3) further includes: a predetermined unit setting means (for example, the group setting unit 27 of FIG. 3) for setting, as the predetermined unit, one or more groups (including a group of only one job execution servers 2) obtained as a result of grouping the plurality of calculation execution devices (for example, the job execution servers 2-1 to 2-n of FIG. 3) according to a predetermined method. One or more groups can thereby be set as the predetermined unit, whereby display control of time slot regions in group units is possible.
(5) The above-mentioned information processing device (for example, the master server 1 of FIG. 3) further includes: a second display control means (for example, the region display controller 28 of FIG. 3) for executing, in a case of a predetermined time region being selected among the plurality of time slot regions, control for displaying a separate region in which information related to the predetermined time region is displayed. By displaying a separate region in which information related to the predetermined time region is selected among a plurality of time slot regions is displayed in this way, the user can confirm detailed information (for example, detailed operating status of the job execution server 2) of the job execution servers in the predetermined time slot.
(6) In the above-mentioned information processing device (for example, the master server 1 of FIG. 3),
   the first display control means (for example, the time-slot display controller 25 of FIG. 3) can execute control for displaying the plurality of time slot regions side-by-side in each of a plurality of the predetermined units.
(7) In the above-mentioned information processing device (for example, the master server 1 of FIG. 3),
   the plurality of time slot regions are configured by dividing one day into every predetermined time, and
   the first display control means (for example, the time-slot display controller 25 of FIG. 3) can cause the plurality of time slot regions to be displayed by arranging side-by-side for N days (N is an integer value of one or more, and is a variable).
(8) In the above-mentioned information processing device (for example, the master server 1 of FIG. 3),
   the first display control means (for example, the time-slot display controller 25 of FIG. 3) can execute control for causing the plurality of time slot regions to be displayed by varying color (for example, text color or background color) according to the predetermined element for the predetermined unit.
(9) An information processing method executed by an information processing device (for example, the master server 1 of FIG. 3) can include:
   a job acquisition step (for example, the job acquisition step S1 of FIG. 4) of acquiring, from each of one or more client devices (for example, the executor terminals 3-1 to 3-m) on a client side performing a calculation request for a predetermined job, one or more of the job;
   a job allocation step (for example, the job allocation step S2 of FIG. 4) of conducting, as job allocation in each of a plurality of predetermined time slots, processing of defining at least part of a plurality of calculation execution devices (for example, the job execution servers 2-1 to 2-n) as an allocation destination, and allocating the one or more of the job to the allocation destination; and
   a first display control step (for example, the element display control step S3 of FIG. 4) of executing control of variably displaying a display mode (for example, heat map, etc.) of a plurality of time slot regions indicating each of the plurality of the predetermined time slots, according to a predetermined element (for example, operating rate of every job execution server 2 or every group, or job contents) for which a content or extent is variable according to time slot, for a predetermined unit (for example, group units, individual device units, job units) including one or more of the plurality of calculation execution devices (for example, the job execution servers 2-1 to 2-n).
(10) A computer can be made to execute control processing including:
   a job acquisition step (for example, the job acquisition step S1 of FIG. 4) of acquiring, from each of one or more client devices (for example, the executor terminals 3-1 to 3-m) on a client side performing a calculation request for a predetermined job, one or more of the job;
   a job allocation step (for example, the job allocation step S2 of FIG. 4) of conducting, as job allocation in each of a plurality of predetermined time slots, processing of defining at least part of a plurality of calculation execution devices (for example, the job execution servers 2-1 to 2-n) as an allocation destination, and allocating the one or more of the job to the allocation destination; and
   a first display control step (for example, the element display control step S3 of FIG. 4) of executing control of variably displaying a display mode (for example, heat map, etc.) of a plurality of time slot regions indicating each of the plurality of the predetermined time slots, according to a predetermined element (for example, operating rate of every job execution server 2 or every group, or job contents) for which a content or extent is variable according to time slot, for a predetermined unit (for example, group units, individual device units, job units) including one or more of the plurality of calculation execution devices (for example, the job execution servers 2-1 to 2-n).

### EXPLANATION OF REFERENCE NUMERALS

1: master server
2: job execution server
3: executor terminal
11: CPU
12: ROM
13: RAM
14: bus
15: I/O interface
16: input unit
17: output unit
18: storage unit
19: communication unit
20: drive
31: removable medium
21: job acquisition unit
22: job allocation unit
23: job transfer unit
24: job execution controller
25: time-slot display controller
26: operating rate calculation unit
27: group setting unit
28: region display controller
eu: calculation executor
mu: manager
NW: network
41: user DB
42: job management DB
S1: job acquisition step
S2: job allocation step
S3: element display control step
51: screen
52: screen
53: screen
54: screen
55: screen
56: screen
61: screen
62: screen
63: job calendar
63a: button
64: screen
65: screen
65a: job calendar
65b: check box column
66: screen
66a: job calendar
66b: "Add Schedule" button
67: job submission screen
67a: "New Job" button
68: job registration screen
71: "M: Cloud" button
72: server management screen
72a: information list
72b: "Add Server" button
73: screen
73a: "Terminate" button
73b: "Back" button
74: pop-up screen
75: pop-up screen
76: screen
76a: information column
77: server group detail screen
78: selection screen
79: server setting screen
79a: "Confirm" button
80: server confirmation screen
80a "Launch" button
81: pop-up screen
82: pop-up screen
83: "Price History" button
84: fee group selection screen
84a: "CSV download" button
85: fee group detail screen

## Claims

1. An information processing device comprising:
a job acquisition unit for acquiring, from each of one or more client devices on a client side performing a calculation request for a predetermined job, one or more of the job;
a job allocation unit for conducting, as job allocation in each of a plurality of predetermined time slots, processing of defining at least part of a plurality of calculation execution devices as an allocation destination, and allocating the one or more of the job to the allocation destination; and
a first display control unit for executing control of variably displaying a display mode of a plurality of time slot regions indicating each of the plurality of the predetermined time slots, according to a predetermined element for which a content or extent is variable according to time slot, for a predetermined unit including one or more of the plurality of calculation execution devices.

2. The information processing device according to claim 1, further comprising an operating rate calculation unit for calculating, in each of the plurality of predetermined time slots, an operating rate for the predetermined unit in accordance with the job allocation,
wherein the first display control unit executes the control by adopting the operating rate as the predetermined element.

3. The information processing device according to claim 1, wherein the first display control unit executes the control by adopting contents of the job allocated to the predetermined unit as the predetermined element.

4. The information processing device according to any one of claims 1 to 3, further comprising a predetermined unit setting unit for setting, as the predetermined unit, one or more groups (including a group of only one calculation execution device) obtained as a result of grouping the plurality of calculation execution devices according to a predetermined method.

5. The information processing device according to any one of claims 1 to 3, further comprising a second display control unit for executing, in a case of a predetermined time region being selected among the plurality of time slot regions, control for displaying a separate region in which information related to the predetermined time region is displayed.

6. The information processing device according to any one of claims 1 to 3, wherein the first display control unit executes control for displaying the plurality of time slot regions side-by-side in each of a plurality of the predetermined units.

7. The information processing device according to any one of claims 1 to 3, wherein the plurality of time slot regions are configured by dividing one day into every predetermined time, and
wherein the first display control unit causes the plurality of time slot regions to be displayed by arranging side-by-side for N days (N is an integer value of one or more, and is a variable).

8. The information processing device according to any one of claims 1 to 3, wherein the first display control unit executes control for causing the plurality of time slot regions to be displayed by varying color according to the predetermined element for the predetermined unit.

9. An information processing method executed by an information processing device, the method comprising:
a job acquisition step of acquiring, from each of one or more client devices on a client side performing a calculation request for a predetermined job, one or more of the job;
a job allocation step of conducting, as job allocation in each of a plurality of predetermined time slots, processing of defining at least part of a plurality of calculation execution devices as an allocation destination, and allocating the one or more of the job to the allocation destination; and
a first display control step of executing control of variably displaying a display mode of a plurality of time slot regions indicating each of the plurality of the predetermined time slots, according to a predetermined element for which a content or extent is variable according to time slot, for a predetermined unit including one or more of the plurality of calculation execution devices.

10. A program causing a computer to execute control processing including:
a job acquisition step of acquiring, from each of one or more client devices on a client side performing a calculation request for a predetermined job, one or more of the job;
a job allocation step of conducting, as job allocation in each of a plurality of predetermined time slots, processing of defining at least part of a plurality of calculation execution devices as an allocation destination, and allocating the one or more of the job to the allocation destination; and
a first display control step of executing control of variably displaying a display mode of a plurality of time slot regions indicating each of the plurality of the predetermined time slots, according to a predetermined element for which a content or extent is variable according to time slot, for a predetermined unit including one or more of the plurality of calculation execution devices.
